(19) **Europäisches Patentamt / European Patent Office / Office européen des brevets**

(11) **EP 4 770 085 A1**

(12) **EUROPEAN PATENT APPLICATION**
published in accordance with Art. 153(4) EPC

(43) Date of publication:
01.07.2026 Bulletin 2026/27

(21) Application number: 24856774.5

(22) Date of filing: 19.08.2024

(51) International Patent Classification (IPC):
$H04N\ 19/117^{(2014.01)}$    $H04N\ 19/105^{(2014.01)}$
$H04N\ 19/186^{(2014.01)}$    $H04N\ 19/132^{(2014.01)}$
$H04N\ 19/157^{(2014.01)}$    $H04N\ 19/593^{(2014.01)}$

(52) Cooperative Patent Classification (CPC):
H04N 19/105; H04N 19/117; H04N 19/132;
H04N 19/157; H04N 19/186; H04N 19/593

(86) International application number:
PCT/KR2024/012277

(87) International publication number:
WO 2025/042162 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.08.2023 KR 20230111562
30.01.2024 KR 20240014330

(71) Applicant: Samsung Electronics Co., Ltd.
Suwon-si, Gyeonggi-do 16677 (KR)

(72) Inventors:
• CHOI, Giyong
  Suwon-si, Gyeonggi-do 16677 (KR)
• PARK, Jeeyoon
  Suwon-si, Gyeonggi-do 16677 (KR)
• CHOI, Kwangpyo
  Suwon-si, Gyeonggi-do 16677 (KR)

(74) Representative: Appleyard Lees IP LLP
G Mill
Dean Clough Industrial Park
Halifax HX3 5AH (GB)

(54) **IMAGE DECODING METHOD, IMAGE DECODING DEVICE, IMAGE ENCODING METHOD AND IMAGE ENCODING DEVICE**

(57) Provided are an image decoding method and device for deriving a filter for chroma prediction based on at least one reference luma sample of a reference luma area and first and second reference chroma samples of a reference chroma area, obtaining at least one luma residual sample from a bitstream, obtaining first and second chroma prediction residual samples by applying the luma residual sample to the filter, obtaining enhanced first and second chroma prediction samples by using each of the first and second chroma prediction residual samples and the first and second reference chroma samples, obtaining first and second chroma residual samples from the bitstream, and reconstructing a current chroma sample by obtaining first and second chroma reconstruction samples by using each of the first and second chroma residual samples and the enhanced first and second chroma prediction samples.

EP 4 770 085 A1

# FIG. 27

```
( START )
```

DERIVE FILTER FOR CHROMA PREDICTION OF CURRENT CHROMA SAMPLE INCLUDED IN CURRENT CHROMA BLOCK BASED ON AT LEAST ONE REFERENCE LUMA SAMPLE OF REFERENCE LUMA AREA INDICATED BY CURRENT LUMA BLOCK CORRESPONDING TO CURRENT CHROMA BLOCK AND FIRST REFERENCE CHROMA SAMPLE AND SECOND REFERENCE CHROMA SAMPLE OF REFERENCE CHROMA AREA CORRESPONDING TO REFERENCE LUMA AREA — S2710

OBTAIN, FROM BITSTREAM, AT LEAST ONE LUMA RESIDUAL SAMPLE INCLUDING CURRENT LUMA RESIDUAL SAMPLE CORRESPONDING TO CURRENT CHROMA SAMPLE OF CURRENT LUMA BLOCK — S2720

OBTAIN FIRST CHROMA PREDICTION RESIDUAL SAMPLE AND SECOND CHROMA PREDICTION RESIDUAL SAMPLE WITH RESPECT TO CURRENT CHROMA SAMPLE BY APPLYING AT LEAST ONE LUMA RESIDUAL SAMPLE TO FILTER — S2730

OBTAIN ENHANCED FIRST CHROMA PREDICTION SAMPLE BY USING FIRST CHROMA PREDICTION RESIDUAL SAMPLE AND FIRST REFERENCE CHROMA SAMPLE, AND OBTAIN ENHANCED SECOND CHROMA PREDICTION SAMPLE BY USING SECOND REFERENCE CHROMA RESIDUAL SAMPLE AND SECOND CHROMA PREDICTION SAMPLE — S2740

OBTAIN, FROM BITSTREAM, FIRST CHROMA RESIDUAL SAMPLE AND SECOND CHROMA RESIDUAL SAMPLE WITH RESPECT TO CURRENT CHROMA SAMPLE — S2750

RECONSTRUCT CURRENT CHROMA SAMPLE BY OBTAINING FIRST CHROMA RECONSTRUCTION SAMPLE BY USING FIRST CHROMA RESIDUAL SAMPLE AND ENHANCED FIRST CHROMA PREDICTION SAMPLE, AND OBTAIN SECOND CHROMA RECONSTRUCTION SAMPLE BY USING SECOND CHROMA RESIDUAL SAMPLE AND ENHANCED SECOND CHROMA PREDICTION SAMPLE — S2760

```
( END )
```

## Description

### Technical Field

The present disclosure relates to an image decoding method, an image decoding apparatus, an image encoding method, and an image encoding apparatus, and more particularly, to image decoding and encoding that derive a filter from a reference luma sample and a reference chroma sample in a reference area indicated by a current block, obtain a chroma prediction residual sample by applying a luma residual sample of the current block to the derived filter, and perform chroma prediction of the current block by using the chroma prediction residual sample and the reference chroma sample in the reference area.

### Background Art

A pixel of a video is expressed in a color space such as RGB and YCbCr, and in a codec such as H.266 Advanced Video Coding (H.264 AVC), High Efficiency Video Coding (HEVC), and Versatile Video Coding (VVC), a YCbCr color space including a luminance component Y and two color chrominance components Cb and Cr is mainly used. Correlations exist between color space components. For example, there is a correlation between the luminance component Y and the chrominance component Cb, a correlation between the luminance component Y and the chrominance component Cr, and a correlation between the chrominance component Cb and the chrominance component Cr. Accordingly, other specific components may be predicted using a single or a plurality of other components.

In standard video compression technology, various prediction methods that use correlations between color components to increase compression efficiency have been proposed.

### Disclosure of Invention

### Solution to Problem

According to an embodiment of the present disclosure, an image decoding method may include deriving a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area, obtaining, from a bitstream, at least one luma residual sample including a current luma residual sample corresponding to the current chroma sample of the current luma block, obtaining a first chroma prediction residual sample and a second chroma prediction residual sample with respect to the current chroma sample by applying the at least one luma residual sample to the filter, obtaining an enhanced first chroma prediction sample by using the first chroma prediction residual sample and the first reference chroma sample, and obtain an enhanced second chroma prediction sample by using the second reference chroma residual sample and the second chroma prediction sample, obtaining, from the bitstream, a first chroma residual sample and a second chroma residual sample with respect to the current chroma sample, and reconstructing the current chroma sample by obtaining a first chroma reconstruction sample by using the first chroma residual sample and the enhanced first chroma prediction sample, and obtaining a second chroma reconstruction sample by using the second chroma residual sample and the enhanced second chroma prediction sample.

According to an embodiment of the present disclosure, an image decoding apparatus may include memory storing one or more instructions and at least one processor configured to operate according to the one or more instructions. The at least one processor may derive a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area. The at least one processor may obtain, from a bitstream, at least one luma residual sample including a current luma residual sample corresponding to the current chroma sample of the current luma block. The at least one processor may obtain a first chroma prediction residual sample and a second chroma prediction residual sample with respect to the current chroma sample by applying the at least one luma residual sample to the filter. The at least one processor may obtain an enhanced first chroma prediction sample by using the first chroma prediction residual sample and the first reference chroma sample, and obtain an enhanced second chroma prediction sample by using the second reference chroma residual sample and the second chroma prediction sample. The at least one processor may obtain, from the bitstream, a first chroma residual sample and a second chroma residual sample with respect to the current chroma sample. The at least one processor may reconstruct the current chroma sample by obtaining a first chroma reconstruction sample by using the first chroma residual sample and the enhanced first chroma prediction sample, and obtaining a second chroma reconstruction sample by using the second chroma residual sample and the enhanced second chroma prediction sample.

According to an embodiment of the present disclosure, an image encoding method may include deriving a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area, generating at least one luma residual sample including a current luma residual sample corresponding to the current chroma sample of the current luma block based on the reference luma area and an original block of the current luma block, obtaining a first chroma prediction residual sample and a second chroma prediction residual sample with respect to the current chroma sample by applying the at least one luma residual sample to the filter, obtaining an enhanced first chroma prediction sample by using the first chroma prediction residual sample and the first reference chroma sample, and obtain an enhanced second chroma prediction sample by using the second reference chroma residual sample and the second chroma prediction sample, generate a first chroma residual sample based on a first chroma original sample with respect to the current chroma sample and the enhanced first chroma prediction sample, and generating a second chroma residual sample based on a second chroma original sample with respect to the current chroma sample and the enhanced second chroma prediction sample, and generating a bitstream including the at least one luma residual sample, the first chroma residual sample, and the second chroma residual sample.

According to an embodiment of the present disclosure, an image encoding apparatus may include memory storing one or more instructions and at least one processor configured to operate according to the one or more instructions. The at least one processor may derive a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area. The at least one processor may generate at least one luma residual sample including a current luma residual sample corresponding to the current chroma sample of the current luma block based on the reference luma area and an original block of the current luma block. The at least one processor may obtain a first chroma prediction residual sample and a second chroma prediction residual sample with respect to the current chroma sample by applying the at least one luma residual sample to the filter. The at least one processor may obtain an enhanced first chroma prediction sample by using the first chroma prediction residual sample and the first reference chroma sample, and obtain an enhanced second chroma prediction sample by using the second reference chroma residual sample and the second chroma prediction sample. The at least one processor may generate a first chroma residual sample based on a first chroma original sample with respect to the current chroma sample and the enhanced first chroma prediction sample, and generate a second chroma residual sample based on a second chroma original sample with respect to the current chroma sample and the enhanced second chroma prediction sample. The at least one processor may generate a bitstream including the at least one luma residual sample, the first chroma residual sample, and the second chroma residual sample.

**Brief Description of Drawings**

FIG. 1 illustrates a schematic block diagram of an image decoding apparatus according to an embodiment of the present disclosure.

FIG. 2 is a flowchart of an image decoding method according to an embodiment of the present disclosure.

FIG. 3 illustrates a process, performed by an image decoding apparatus, of determining at least one coding unit by splitting a current coding unit, according to an embodiment of the present disclosure.

FIG. 4 illustrates a process, performed by an image decoding apparatus, of determining at least one coding unit by splitting a non-square coding unit, according to an embodiment of the present disclosure.

FIG. 5 illustrates a process, performed by an image decoding apparatus, of splitting a coding unit based on at least one of block shape information or split shape mode information, according to an embodiment of the present disclosure.

FIG. 6 illustrates a method, performed by an image decoding apparatus, of determining a certain coding unit from among an odd number of coding units, according to an embodiment of the present disclosure.

FIG. 7 illustrates an order of processing a plurality of coding units when an image decoding apparatus determines the plurality of coding units by splitting a current coding unit, according to an embodiment of the present disclosure.

FIG. 8 illustrates a process, performed by an image decoding apparatus, of determining that a current coding unit is to be split into an odd number of coding units, when the coding units are not processable in a certain order, according to an embodiment of the present disclosure.

FIG. 9 illustrates a process, performed by an image decoding apparatus, of determining at least one coding unit by splitting a first coding unit, according to an embodiment of the present disclosure.

FIG. 10 illustrates that a shape into which a second coding unit is splittable is restricted when the second coding unit having a non-square shape, which is determined when an image decoding apparatus splits a first coding unit, satisfies

EP 4 770 085 A1

a certain condition, according to an embodiment of the present disclosure.

FIG. 11 illustrates a process, performed by an image decoding apparatus, of splitting a square coding unit when split shape mode information is unable to indicate that the square coding unit is split into four square coding units, according to an embodiment of the present disclosure.

FIG. 12 illustrates that a processing order between a plurality of coding units may be changed depending on a process of splitting a coding unit, according to an embodiment of the present disclosure.

FIG. 13 illustrates a process of determining a depth of a coding unit as a shape and size of the coding unit change, when the coding unit is recursively split such that a plurality of coding units are determined, according to an embodiment of the present disclosure.

FIG. 14 illustrates depths that are determinable based on shapes and sizes of coding units, and part indexes (PIDs) that are for distinguishing the coding units, according to an embodiment of the present disclosure.

FIG. 15 illustrates that a plurality of coding units are determined based on a plurality of certain data units included in a picture, according to an embodiment of the present disclosure.

FIG. 16 illustrates a processing block serving as a unit for determining a determination order of reference coding units included in a picture, according to an embodiment of the present disclosure

FIG. 17 is a diagram for describing a method of performing chroma prediction using a cross-component linear model (CCLM), according to an embodiment of the present disclosure.

FIG. 18 is a diagram for describing a method of performing chroma prediction using a multi-model linear model (MMLM), according to an embodiment of the present disclosure.

FIG. 19 is a diagram for describing a method of performing chroma prediction using areas other than neighboring areas adjacent to a current block, according to an embodiment of the present disclosure.

FIG. 20 is a diagram for describing a method of performing chroma prediction using a convolutional cross-component model (CCCM), according to an embodiment of the present disclosure.

FIG. 21 is a diagram for describing a method of performing chroma prediction using a block vector guided convolution cross component model (BVG-CCCM), according to an embodiment of the present disclosure.

FIG. 22 is a diagram for describing a method of performing chroma prediction using a cross component residual model (CCRM), according to an embodiment of the present disclosure.

FIG. 23 is a diagram for describing positions of luma samples to which a filter of a CCRM is applied, according to an embodiment of the present disclosure.

FIG. 24 is a diagram for describing a method of performing chroma prediction using a luma residual sample of a current block and a reference chroma sample of a reference area, according to an embodiment of the present disclosure.

FIG. 25 is a diagram for describing a method of performing chroma prediction using a luma residual sample of a current block and a reference chroma sample of a reference area in a BVG-CCCM, according to an embodiment of the present disclosure.

FIG. 26 is a diagram for describing a method of performing chroma prediction using a luma residual sample of a current block and a reference chroma sample of a reference area in a CCRM, according to an embodiment of the present disclosure.

FIG. 27 is a diagram for describing an image decoding method according to an embodiment of the present disclosure.

FIG. 28 is a block diagram illustrating an image decoding apparatus according to an embodiment of the present disclosure.

FIG. 29 is a diagram for describing an image encoding method according to an embodiment of the present disclosure.

FIG. 30 is a block diagram illustrating an image encoding apparatus according to an embodiment of the present disclosure.

**Mode for the Invention**

Throughout the present disclosure, the expression "at least one of a, b or c" indicates only a, only b, only c, both a and b, both a and c, both b and c, all of a, b, and c, or variations thereof.

Advantages and features of embodiments and methods of accomplishing the same may be understood more readily by reference to the embodiments and the accompanying drawings. In this regard, the present disclosure may have different forms and should not be construed as being limited to the embodiments set forth herein. Rather, these embodiments are provided so that this present disclosure will be thorough and complete and will fully convey the concept of the present disclosure to one of ordinary skill in the art.

The terms used in the specification will be briefly defined, and the embodiments will be described in detail.

All terms including descriptive or technical terms which are used in the specification should be construed as having meanings that are obvious to one of ordinary skill in the art. However, the terms may have different meanings according to the intention of one of ordinary skill in the art, precedent cases, or the appearance of new technologies. In addition, some terms may be arbitrarily selected by the applicant, and in this case, the meaning of the selected terms will be described in detail in the detailed description of the present disclosure. Therefore, the terms used in the present disclosure should not be interpreted based on only their names but have to be defined based on the meaning of the terms together with the descriptions throughout the specification.

In the following specification, the singular forms include plural forms unless the context clearly indicates otherwise.

Throughout the specification, when a part "includes" or "comprises" an element, unless there is a particular description contrary thereto, the part may further include other elements, not excluding the other elements.

In addition, numerals (e.g., "first", "second", etc.) in the description of the specification are used only to distinguish one element from another element.

In addition, terms such as "unit" indicate a software or hardware element and the "unit" performs certain functions. However, the "unit" is not limited to software or hardware. The "unit" may be formed so as to be in an addressable storage medium, or may be formed so as to operate one or more processors. Thus, for example, the term "unit" may refer to elements such as software elements, object-oriented software elements, class elements, and task elements, and may include processes, functions, attributes, procedures, subroutines, segments of program code, drivers, firmware, micro codes, circuits, data, a database, data structures, tables, arrays, or variables. A function provided by the elements and "units" may be associated with a smaller number of elements and "units", or may be divided into additional elements and "units".

According to an embodiment of the present disclosure, the "unit" may include a processor and memory. The term "processor" should be interpreted broadly to include a general purpose processor, a central processing unit (CPU), a microprocessor, a digital signal processor (DSP), a controller, a microcontroller, a state machine, etc. In some environments, the "processor" may refer to an application specific semiconductor (ASIC), a programmable logic device (PLD), a field programmable gate array (FPGA), etc. The term "processor" may refer to a combination of processing devices such as, for example, a combination of a DSP and a microprocessor, a combination of a plurality of microprocessors, a combination of one or more microprocessors in conjunction with a DSP core, or a combination of any other such configurations.

The processor may include various circuits and/or a plurality of processors. For example, the term "processor" used herein, including the claims, may include various types of processing circuitry including at least one processor. One or more processors in the at least one processor may be configured to individually and/or collectively perform various functions described here in a distributed manner. As used herein, "processor", "at least one processor", and "one or more processors" may be configured to perform various functions. However, the recited terms cover a situation in which one processor performs some of the functions and other processor(s) performs the other functions, and a situation in which one processor may perform all of the functions. In addition, at least one processor may include a combination of processors configured to perform a variety of the disclosed functions in a distributed manner. The at least one processor may execute program instructions to achieve or perform various functions.

The term "memory" should be interpreted broadly to include any electronic component capable of storing electronic information. The term "memory" may refer to various types of processor-readable media such as random access memory (RAM), a read-only memory (ROM), a non-volatile random access memory (NVRAM), a programmable read-only memory (PROM), an erase-programmable read-only memory (EPROM), an electrically erasable PROM (EEPROM), a flash memory, a magnetic or optical data storage device, registers, etc. When the processor may read information from memory and/or write information to the memory, the memory is said to be in an electronic communication state with the processor. The memory integrated in the processor is in an electronic communication state with the processor.

Hereinafter, an "image" may be a static image such as a still image of a video or may be a dynamic image such as a moving image, that is, the video itself.

Hereinafter, a "sample" denotes data assigned to a sampling position of an image, i.e., data to be processed. For example, pixel values of an image in a spatial domain and transform coefficients on a transform domain may be samples. A unit including at least one such sample may be defined as a block.

In addition, in the specification, a "current block" may indicate a block of a largest coding unit, coding unit, prediction unit, or transform unit of a current image to be encoded or decoded, or a subblock of the block.

Hereinafter, an embodiment will be described in detail with reference to the accompanying drawings to allow one of ordinary skill in the art to easily implement the embodiment. In addition, portions irrelevant to the description will be omitted in the drawings for a clear description of the present disclosure.

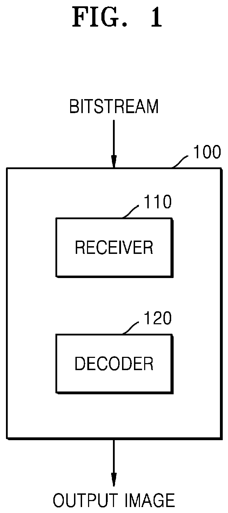

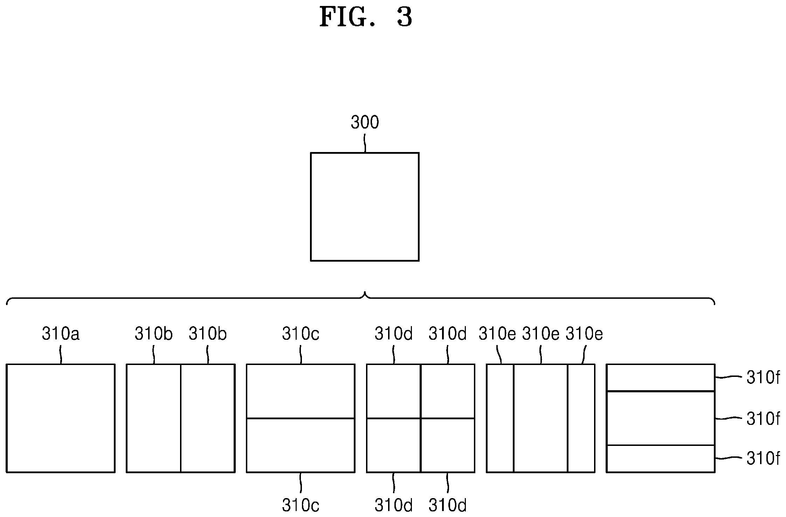

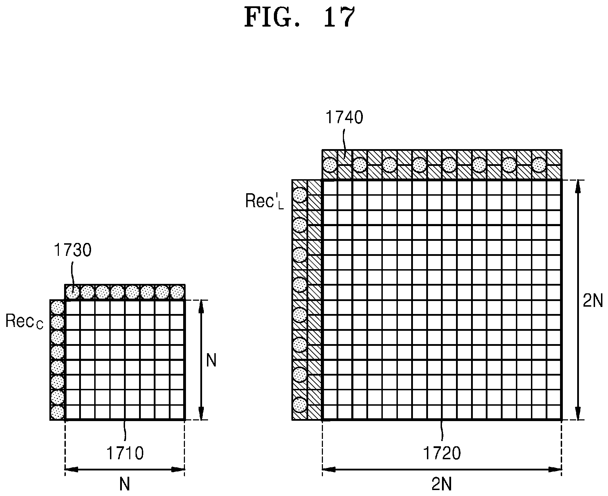

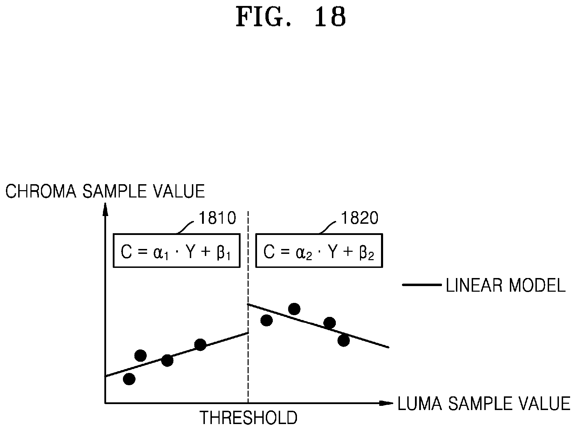

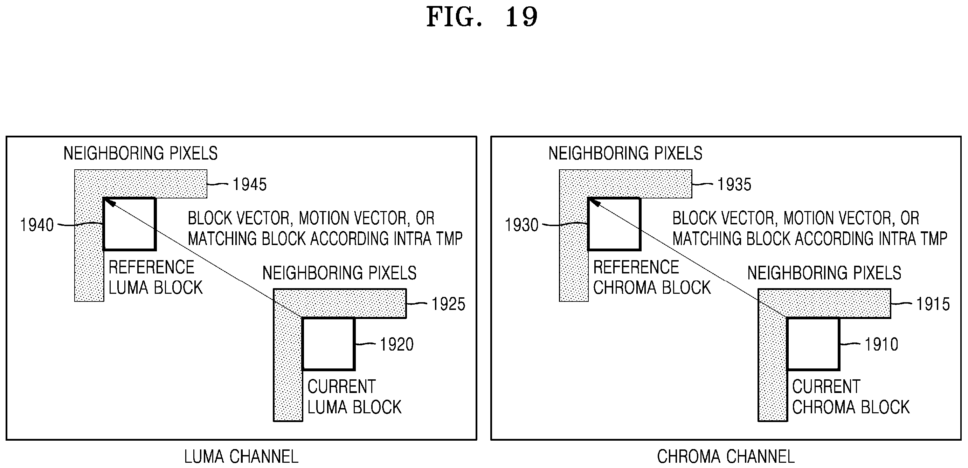

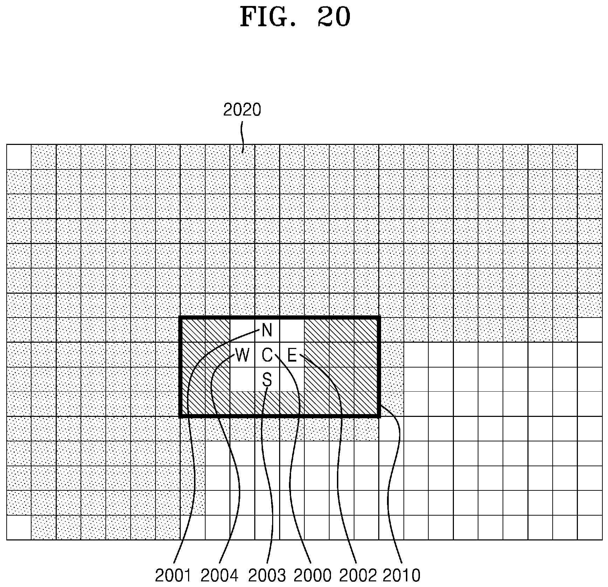

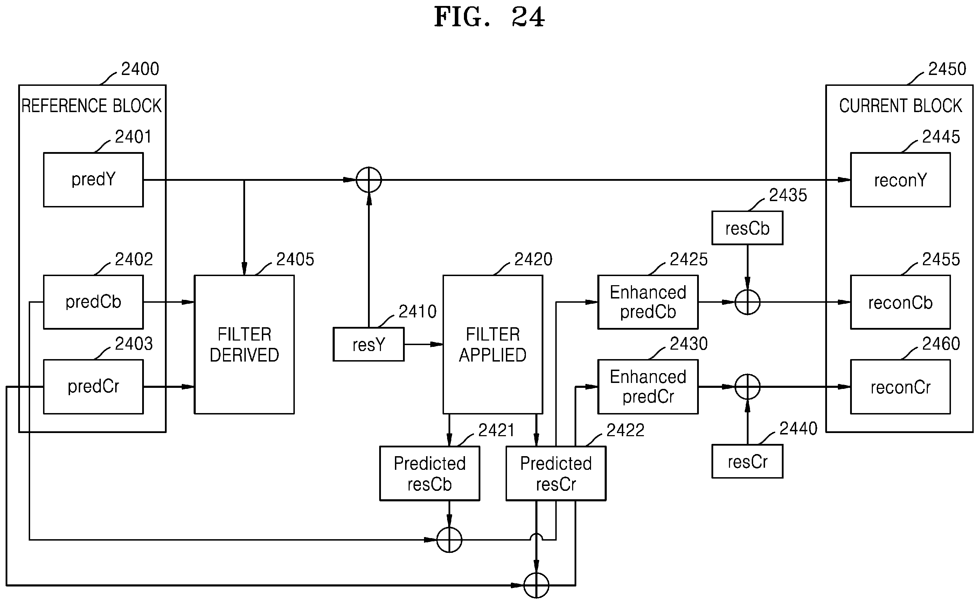

Hereinafter, with reference to FIGS. 1 to 16, an image encoding apparatus and an image decoding apparatus, and an image encoding method and an image decoding method will be described in detail according to an embodiment of the present disclosure. Referring to FIGS. 3 to 16, a method of determining a data unit of an image according to an embodiment of the present disclosure will be described, referring to FIGS. 17 and 18, methods of performing chroma prediction using a linear model according to a correlation between a luma component and a chroma component of a reference area, according to an embodiment of the present disclosure, will be described, referring to FIG. 19, a method of performing chroma prediction using areas other than neighboring areas adjacent to a current block, according to an embodiment of the present disclosure, will be described, referring to FIGS. 20 to 23, methods of performing chroma prediction by deriving a filter according to the correlation between the luma component and the chroma component of the reference area and applying a reconstructed current luma sample to the filter will be described, and, referring to FIGS. 24 to 30, methods of deriving a filter according to a correlation between the reference luma sample and the reference chroma sample of the reference area indicated by the current block, obtaining a current chroma prediction residual sample by applying the current luma residual sample to the filter, obtaining an enhanced current chroma prediction sample by using the current chroma prediction residual sample and the reference chroma sample, and performing chroma prediction based on the enhanced current chroma prediction sample and the current chroma residual sample, according to an embodiment of the present disclosure, will be described.

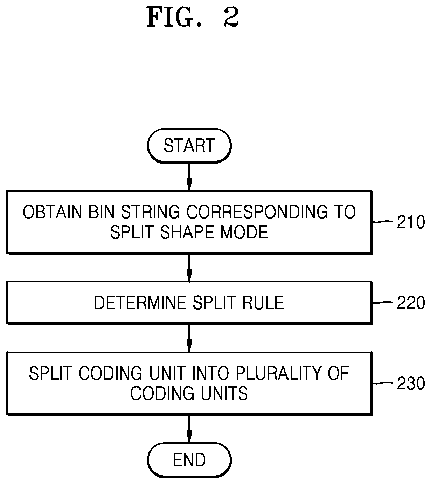

Hereinafter, with reference to FIGS. 1 and 2, according to an embodiment of the present disclosure, a method and apparatus for adaptively selecting a context model, based on various shapes of coding units, will now be described in detail.

FIG. 1 illustrates a schematic block diagram of an image decoding apparatus according to an embodiment of the present disclosure.

An image decoding apparatus 100 may include a receiver 110 and a decoder 120. The receiver 110 and the decoder 120 may include at least one processor. In addition, the receiver 110 and the decoder 120 may include memory storing instructions to be performed by the at least one processor.

The receiver 110 may receive a bitstream. The bitstream includes information about an image encoded by an image encoding apparatus 2200 to be described below. In addition, the bitstream may be transmitted from the image encoding apparatus 2200. The image encoding apparatus 2200 and the image decoding apparatus 100 may be connected by wire or wirelessly, and the receiver 110 may receive the bitstream by wire or wirelessly. The receiver 110 may receive the bitstream from a storage medium such as an optical medium, a hard disk, etc. The decoder 120 may reconstruct an image based on information obtained from the received bitstream. The decoder 120 may obtain, from the bitstream, a syntax element for reconstructing the image. The decoder 120 may reconstruct the image based on the syntax element.

Operations of the image decoding apparatus 100 will be described in detail with reference to FIG. 2.

FIG. 2 is a flowchart of an image decoding method according to an embodiment of the present disclosure.

According to an embodiment of the present disclosure, the receiver 110 receives a bitstream.

The image decoding apparatus 100 obtains, from the bitstream, a bin string corresponding to a split shape mode of a coding unit (operation 210). The image decoding apparatus 100 determines a split rule of the coding unit (operation 220). In addition, the image decoding apparatus 100 splits the coding unit into a plurality of coding units, based on at least one of the bin string corresponding to the split shape mode or the split rule (operation 230). The image decoding apparatus 100 may determine an allowable first range of a size of the coding unit, according to a ratio of height to width of the coding unit, so as to determine the split rule. The image decoding apparatus 100 may determine an allowable second range of the size of the coding unit, according to the split shape mode of the coding unit, so as to determine the split rule.

Hereinafter, splitting of a coding unit will be described in detail according to an embodiment of the present disclosure.

First, one picture may be split into one or more slices or one or more tiles. One slice or one tile may be a sequence of one or more largest coding units (coding tree units (CTUs)). A largest coding block (coding tree block (CTB)) is conceptually compared to a largest coding unit (CTU).

The largest coding block (CTB) indicates an NxN block including NxN samples (N is an integer). Each color component may be split into one or more largest coding blocks.

A largest coding unit (CTU) of a case where a picture includes three sample arrays (sample arrays for Y, Cr, and Cb components) is a unit including a largest coding block of a luma sample, two corresponding largest coding blocks of chroma samples, and syntax structures used to encode the luma sample and the chroma samples. A largest coding unit of a case where a picture is a monochrome picture is a unit including a largest coding block of a monochrome sample and syntax structures used to encode monochrome samples. A largest coding unit of a case where a picture is a picture encoded in color planes separated according to color components is a unit including syntax structures used to encode the picture and samples of the picture.

One largest coding block (CTB) may be split into MxN coding blocks including MxN samples (M and N are integers).

A coding unit (CU) of a case where a picture has sample arrays for Y, Cr, and Cb components is a unit including a coding block of a luma sample, two corresponding coding blocks of chroma samples, and syntax structures used to encode the luma sample and the chroma samples. A coding unit of a case where a picture is a monochrome picture is a unit including a coding block of a monochrome sample and syntax structures used to encode the monochrome samples. A coding unit of a case where a picture is a picture encoded in color planes separated according to color components is a unit including syntax structures used to encode the picture and samples of the picture.

As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a certain size including a certain number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, the present disclosure is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y:Cb:Cr ratio is 4:2:0 according to a color format, a size of a chroma block may be half a size of a luma block, and a size of a chroma largest coding unit may be half a size of a luma largest coding unit.

According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum of the luma coding block that is ternary splittable in an I-picture may be 32x32, and the maximum of the luma coding block that is ternary splittable in a P-picture or a B-picture may be 64x64.

In addition, a largest coding unit may be hierarchically split into coding units based on split shape mode information obtained from a bitstream. At least one of information indicating whether to perform quad splitting, information indicating whether to perform multi-splitting, split direction information, or split type information may be obtained as the split shape mode information from the bitstream.

For example, the information indicating whether to perform quad splitting may indicate whether a current coding unit is to be quad split (QUAD_SPLIT) or not.

When the current coding unit is not quad split, the information indicating whether to perform multi-splitting may indicate whether the current coding unit is to be no longer split (NO_SPLIT) or to be binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode SPLIT_BT_VER.

The image decoding apparatus 100 may obtain, from the bitstream, one bin string of the split shape mode information. A form of the bitstream received by the image decoding apparatus 100 may include fixed length binary code, unary code, truncated unary code, pre-determined binary code, etc. The bin string is information in a binary number. The bin string may include at least one bit. The image decoding apparatus 100 may obtain the split shape mode information corresponding to the bin string, based on the split rule. The image decoding apparatus 100 may determine whether to quad-split a coding unit, whether not to split a coding unit, a split direction, and a split type, based on one bin string.

The coding unit may be smaller than or the same as the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. In addition, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in detail with reference to FIGS. 3 to 16.

In addition, one or more prediction blocks for prediction may be determined from a coding unit. The prediction block may be the same as or smaller than the coding unit. In addition, one or more transform blocks for transformation may be determined from a coding unit. The transform block may be the same as or smaller than the coding unit.

The shapes and sizes of the transform block and prediction block may not be related to each other.

In another embodiment, prediction may be performed by using a coding unit as a prediction unit. In addition, transformation may be performed by using a coding unit as a transform block.

The splitting of the coding unit will be described in detail with reference to FIGS. 3 to 16. A current block and a neighboring block of the present disclosure may indicate one of the largest coding unit, the coding unit, the prediction block, and the transform block. In addition, the current block of the current coding unit is a block that is currently being decoded or encoded or a block that is currently being split. The neighboring block may be a block reconstructed before the current block. The neighboring block may be spatially or temporally adjacent to the current block. The neighboring block may be located at one of bottom left, left, top left, top, top right, right, bottom right of the current block.

FIG. 3 illustrates a process, performed by an image decoding apparatus, of determining at least one coding unit by splitting a current coding unit, according to an embodiment of the present disclosure.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width to height, or size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information about the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information about the coding unit to be a non-square shape. When the shape of the coding unit is non-square, the image decoding apparatus 100 may determine the ratio of width to height among the block shape information about the coding unit to be at least one of 1:2, 2:1, 1:4, 4:1, 1:8, 8:1, 1:16, 16:1, 1:32, or 32:1. In addition, the image decoding apparatus 100 may determine whether the coding unit is in a horizontal direction or a vertical direction, based on the length of the width and the length of the height of the coding unit. In addition, the image decoding apparatus 100 may determine the size of the coding unit, based on at least one of the length of the width, the length of the height, or the area of the coding unit.

According to an embodiment, the image decoding apparatus 100 may determine the shape of the coding unit by using the block shape information, and may determine a split shape of the coding unit by using the split shape mode information. That is, a splitting method of the coding unit indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the image encoding apparatus2200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine split shape mode information with respect to the largest coding unit to be a quad split. In addition, the image decoding apparatus 100 may determine split shape mode information regarding the smallest coding unit to be "no split". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. In addition, the image decoding apparatus 100 may determine the size of the smallest coding unit to be 4x4. The image decoding apparatus 100 may obtain split shape mode information indicating "no split" with respect to the smallest coding unit.

According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information about a current coding unit 300 indicates a square shape, the decoder 120 may determine that a coding unit 310a having the same size as the current coding unit 300 is not split, based on the split shape mode information indicating no split, or may determine coding units 310b, 310c, 310d, 310e, 310f, etc. split based on the split shape mode information indicating a certain splitting method.

Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary-splitting in a vertical direction. The image decoding apparatus 100 may determine three coding units 310f obtained by splitting the current coding unit 300 in a horizontal direction, based on the split shape mode information indicating to perform ternary-splitting in a horizontal direction. However, splitting methods of the square coding unit are not limited to the above-described methods, and the split shape mode information may indicate various methods. Certain splitting methods of splitting the square coding unit will be described in detail below in various embodiments.

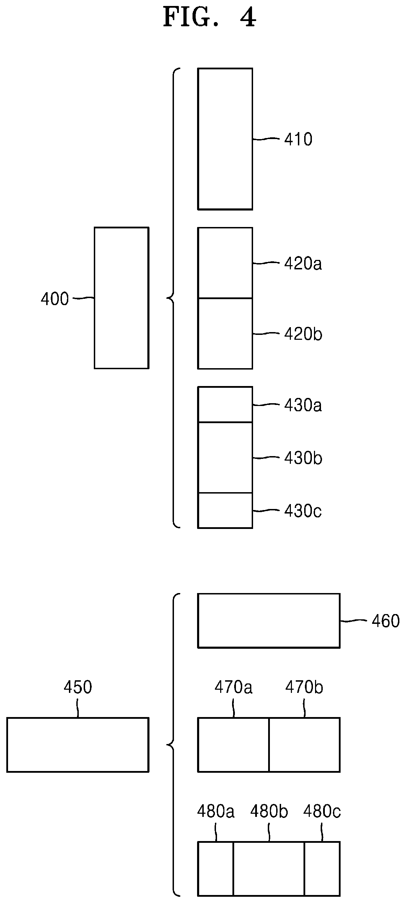

FIG. 4 illustrates a process, performed by an image decoding apparatus, of determining at least one coding unit by splitting a non-square coding unit, according to an embodiment of the present disclosure.

According to an embodiment, the image decoding apparatus 100 may use block shape information indicating that a current coding unit has a non-square shape. The image decoding apparatus 100 may determine whether not to split the non-square current coding unit or whether to split the non-square current coding unit by using a certain splitting method, based on split shape mode information. Referring to FIG. 4, when the block shape information about a current coding unit 400 or 450 indicates a non-square shape, the image decoding apparatus 100 may determine that a coding unit 410 or 460 having the same size as the current coding unit 400 or 450 is not split, based on the split shape mode information indicating no split, or may determine coding units 420a, 420b, 430a, 430b, 430c, 470a, 470b, 480a, 480b, and 480c split based on the split shape mode information indicating a certain splitting method. Certain splitting methods of splitting a non-square coding unit will be described in detail below in various embodiments.

According to an embodiment, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment, when the image decoding apparatus 100 splits the non-square current coding unit 400 or 450 based on the split shape mode information, the image decoding apparatus 100 may consider the location of a long side of the non-square current coding unit 400 or 450 so as to split a current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment, when the split shape mode information indicates to split (ternary-split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment, a ratio of height to width of the current coding unit 400 or 450 may be 4:1 or 1:4. When the ratio of height to width is 4:1, the block shape information may be a horizontal direction because the length of the width is longer than the length of the height. When the ratio of height to width is 1:4, the block shape information may be a vertical direction because the length of the width is shorter than the length of the height. The image decoding apparatus 100 may determine to split a current coding unit into the odd number of blocks, based on the split shape mode information. In addition, the image decoding apparatus 100 may determine a split direction of the current coding unit 400 or 450, based on the block shape information about the current coding unit 400 or 450. For example, when the current coding unit 400 is in the vertical direction, the image decoding apparatus 100 may determine the coding units 430a, 430b, and 430c by splitting the current coding unit 400 in the horizontal direction. In addition, when the current coding unit 450 is in the horizontal direction, the image decoding apparatus 100 may determine the coding units 480a, 480b, and 480c by splitting the current coding unit 450 in the vertical direction.

According to an embodiment, the image decoding apparatus 100 may determine the odd number of coding units included in the current coding unit 400 or 450, and not all the determined coding units may have the same size. For example, a certain coding unit 430b or 480b from among the determined odd number of coding units 430a, 430b, and 430c, or 480a, 480b, and 480c may have a size different from the size of the other coding units 430a and 430c, or 480a and 480c. That is, coding units that may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding apparatus 100 may determine the odd number of coding units included in the current coding unit 400 or 450, and further, may put a certain restriction on at least one coding unit from among the odd number of coding units generated by splitting the current coding unit 400 or 450. Referring to FIG. 4, the image decoding apparatus 100 may set a decoding process regarding the coding unit 430b or 480b to be different from that of the other coding units 430a and 430c, or 480a or 480c, the coding unit 430b or 480b being located at the center among the three coding units 430a, 430b, and 430c or 480a, 480b, and 480c generated as the current coding unit 400 or 450 is split. For example, the image decoding apparatus 100 may restrict the coding unit 430b or 480b at the center location to be no longer split or to be split only a certain number of times, unlike the other coding units 430a and 430c, or 480a and 480c.

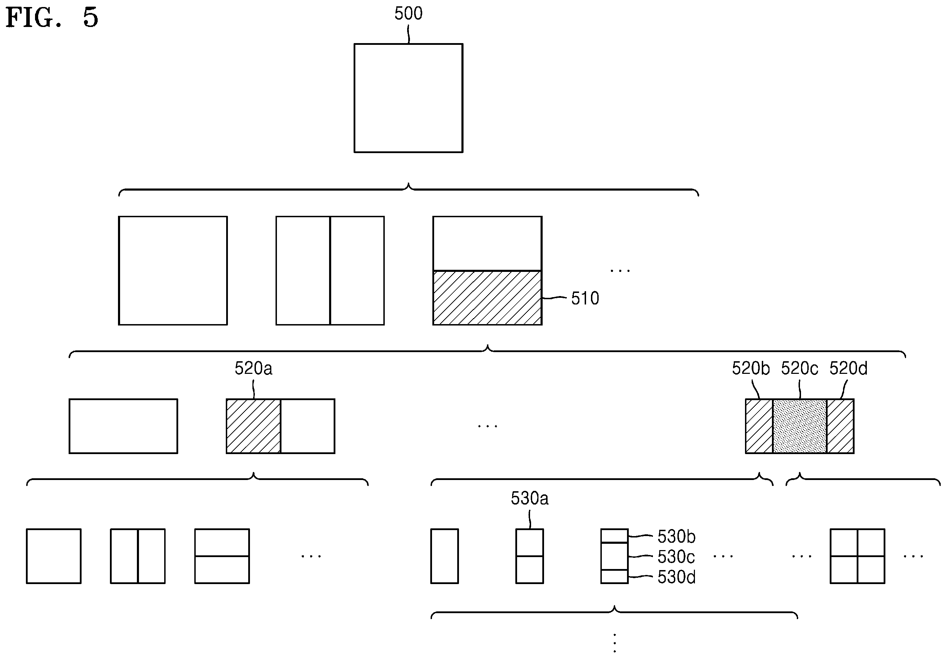

FIG. 5 illustrates a process, performed by an image decoding apparatus, of splitting a coding unit based on at least one of block shape information or split shape mode information, according to an embodiment of the present disclosure.

According to an embodiment, the image decoding apparatus 100 may determine to split or not to split a square first coding unit 500 into coding units, based on at least one of the block shape information or the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after a coding unit is split. For example, a second coding unit may be determined by splitting a first coding unit, and a third coding unit may be determined by splitting the second coding unit. Hereinafter, it will be understood that the structure of the first coding unit, the second coding unit, and the third coding unit follows the above descriptions.

According to an embodiment, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, 520b, 520c, and 520d based on the split shape mode information. The image decoding apparatus 100 may obtain the split shape mode information, and may obtain a plurality of various-shaped second coding units (e.g., the second coding unit 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information about the first coding unit 500, the second coding unit 510 may also be split into the third coding units (e.g., 520a, 520b, 520c, and 520d) based on the split shape mode information about the second coding unit 510. That is, a coding unit may be recursively split based on the split shape mode information about each coding unit. Therefore, a square coding unit may be determined by splitting a non-square coding unit, and a non-square coding unit may be determined by recursively splitting the square coding unit.

Referring to FIG. 5, a certain coding unit from among the odd number of third coding units 520b, 520c, and 520d determined by splitting the non-square second coding unit 510 (e.g., a coding unit at a center location or a square coding unit) may be recursively split. According to an embodiment, the square third coding unit 520b from among the odd number of third coding units 520b, 520c, and 520d may be split in a horizontal direction into a plurality of fourth coding units. A non-square fourth coding unit 530b or 530d from among a plurality of fourth coding units 530a, 530b, 530c, and 530d may be split into a plurality of coding units again. For example, the non-square fourth coding unit 530b or 530d may be split into the odd number of coding units again. A method that may be used to recursively split a coding unit will be described below in various embodiments.

According to an embodiment, the image decoding apparatus 100 may split each of the third coding units 520a, or 520b, 520c, and 520d into coding units, based on the split shape mode information. In addition, the image decoding apparatus 100 may determine not to split the second coding unit 510 based on the split shape mode information. According to an embodiment, the image decoding apparatus 100 may split the non-square second coding unit 510 into the odd number of third coding units 520b, 520c, and 520d. The image decoding apparatus 100 may put a certain restriction on a certain third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a certain splitting method (e.g., split into only four coding units or split by using a splitting method of the second coding unit 510), or to be split only a certain number of times (e.g., split only n times (where n>0)). However, the restrictions on the third coding unit 520c at the center location are not limited to the above-described embodiments, and may include various restrictions for decoding the third coding unit 520c at the center location differently from the other third coding units 520b and 520d.

According to an embodiment, the image decoding apparatus 100 may obtain the split shape mode information, which is used to split a current coding unit, from a certain location in the current coding unit.

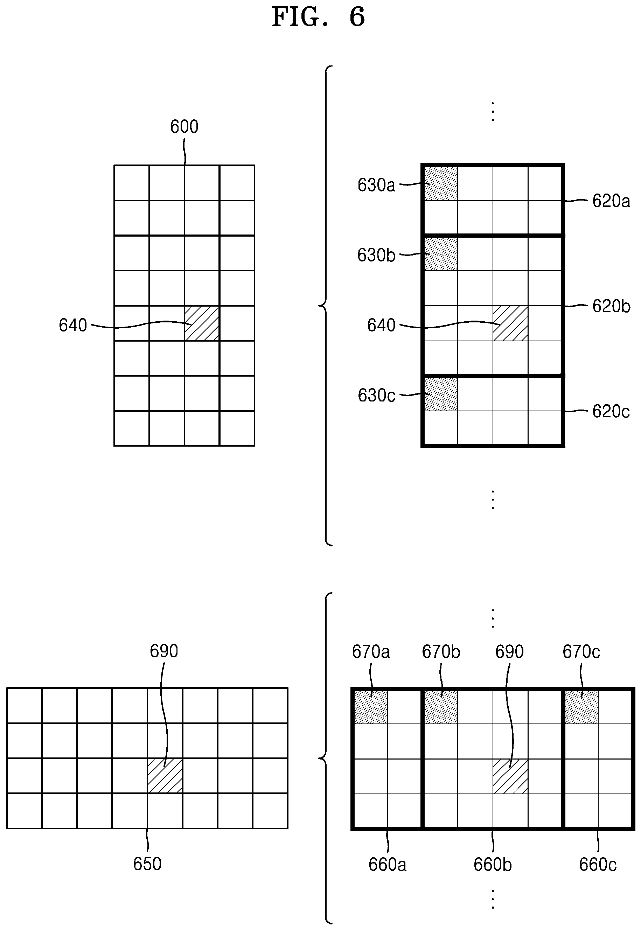

FIG. 6 illustrates a method, performed by an image decoding apparatus, of determining a certain coding unit from among an odd number of coding units, according to an embodiment of the present disclosure.

Referring to FIG. 6, split shape mode information about a current coding unit 600 or 650 may be obtained from a sample of a certain location (e.g., a sample 640 or 690 of a center location) from among a plurality of samples included in the current coding unit 600 or 650. However, the certain location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, and lower right locations). The image decoding apparatus 100 may obtain the split shape mode information from the certain location and may determine to split or not to split the current coding unit into various-shaped and various-sized coding units.

According to an embodiment, when the current coding unit is split into a certain number of coding units, the image decoding apparatus 100 may select one of the coding units. Various methods may be used to select one of a plurality of coding units, and will be described below in various embodiments.

According to an embodiment, the image decoding apparatus 100 may split the current coding unit into a plurality of coding units, and may determine a coding unit at a certain location.

According to an embodiment, image decoding apparatus 100 may use information indicating locations of the odd number of coding units so as to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of certain samples included in the coding units 620a, 620b, and 620c. Specifically, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c.

According to an embodiment, the information indicating the locations of the upper left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the upper left sample 630a of the upper coding unit 620a may include coordinates (xa, ya), information indicating the location of the upper left sample 630b of the middle coding unit 620b may include coordinates (xb, yb), and information indicating the location of the upper left sample 630c of the lower coding unit 620c may include coordinates (xc, yc). The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or furthermore may use coordinates (dxb, dyb) indicating a relative location of the upper left sample 630b of the middle coding unit 620b and coordinates (dxc, dyc) indicating a relative location of the upper left sample 630c of the lower coding unit 620c with respect to the location of the upper left sample 630a of the upper coding unit 620a. A method of determining a coding unit at a certain location by using coordinates of a sample included in the coding unit, as information indicating a location of the sample, is not limited to the above-described method, and may include various arithmetic methods of using the coordinates of the sample.

According to an embodiment, the image decoding apparatus 100 may split the current coding unit 600 into the plurality of coding units 620a, 620b, and 620c, and may select one of the coding units 620a, 620b, and 620c based on a certain criterion. For example, the image decoding apparatus 100 may select the coding unit 620b that has a size different from that of the others, from among the coding units 620a, 620b, and 620c.

According to an embodiment, the image decoding apparatus 100 may determine the width or height of each of the coding units 620a, 620b, and 620c by using the coordinates (xa, ya) that is the information indicating the location of the upper left sample 630a of the upper coding unit 620a, the coordinates (xb, yb) that is the information indicating the location of the upper left sample 630b of the middle coding unit 620b, and the coordinates (xc, yc) that is the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the upper coding unit 620a to be the width of the current coding unit 600. The image decoding apparatus 100 may determine the height of the upper coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit by using the width or height of the current coding unit or the widths or heights of the upper coding unit 620a and the middle coding unit 620b. The image decoding apparatus 100 may determine a coding unit having a size different from those of the other coding units, based on the determined widths and heights of the coding units 620a, 620b, and 620c. Referring to FIG. 6, the image decoding apparatus 100 may determine the middle coding unit 620b having a size different from the sizes of the upper coding unit 620a and the lower coding unit 620c, as the coding unit of the certain location. However, the above-described method, performed by the image decoding apparatus 100, of determining a coding unit having a size different from the size of the other coding units merely corresponds to an example of determining a coding unit at a certain location by using the sizes of coding units that are determined based on coordinates of samples, and thus, various methods of determining a coding unit at a certain location by comparing the sizes of coding units that are determined based on coordinates of certain samples may be used.

The image decoding apparatus 100 may determine the width or height of each of the coding units 660a, 660b, and 660c by using the coordinates (xd, yd) that is information indicating the location of an upper left sample 670a of the left coding unit 660a, the coordinates (xe, ye) that is information indicating the location of an upper left sample 670b of the middle coding unit 660b, and the coordinates (xf, yf) that is information indicating a location of an upper left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 600. According to an embodiment, the image decoding apparatus 100 may determine the width or height of the right coding unit 660c by using the width or height of the current coding unit 650 or the widths or heights of the left coding unit 660a and the middle coding unit 660b. The image decoding apparatus 100 may determine a coding unit that has a size different from that of the others, based on the determined widths and heights of the coding units 660a, 660b, and 660c. Referring to FIG. 6, the image decoding apparatus 100 may determine the middle coding unit 660b having a size different from the sizes of the left coding unit 660a and the right coding unit 660c, as the coding unit of the certain location. However, the above-described method, performed by the image decoding apparatus 100, of determining a coding unit having a size different from the size of the other coding units merely corresponds to an example of determining a coding unit at a certain location by using the sizes of coding units that are determined based on coordinates of samples, and thus, various methods of determining a coding unit at a certain location by comparing the sizes of coding units that are determined based on coordinates of certain samples may be used.

However, locations of samples considered to determine locations of coding units are not limited to the above-described upper left locations, and information about arbitrary locations of samples included in the coding units may be used.

According to an embodiment, the image decoding apparatus 100 may select a coding unit at a certain location from among an odd number of coding units determined by splitting the current coding unit, by considering the shape of the current coding unit. For example, when the current coding unit has a non-square shape, a width of which is longer than a height, the image decoding apparatus 100 may determine the coding unit at the certain location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the certain location in a vertical direction. That is, the image decoding apparatus 100 may determine one of coding units at different locations in a vertical direction and may put a restriction on the coding unit.

According to an embodiment, the image decoding apparatus 100 may use information indicating respective locations of an even number of coding units so as to determine the coding unit at the certain location from among the even number of coding units. The image decoding apparatus 100 may determine an even number of coding units by splitting (binary-splitting) the current coding unit, and may determine the coding unit at the certain location by using the information about the locations of the even number of coding units. An operation related thereto may correspond to the operation of determining a coding unit at a certain location (e.g., a center location) from among an odd number of coding units, which has been described in detail above with reference to FIG. 6, and thus, detailed descriptions thereof are not provided here.

According to an embodiment, when a non-square current coding unit is split into a plurality of coding units, certain information about a coding unit at a certain location may be used in a splitting operation to determine the coding unit at the certain location from among the plurality of coding units. For example, the image decoding apparatus 100 may use at least one of block shape information or split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information about the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, certain information for identifying the coding unit at the certain location may be obtained from a certain sample included in a coding unit to be determined. Referring to FIG. 6, the image decoding apparatus 100 may use the split shape mode information that is obtained from a sample at a certain location in the current coding unit 600 (e.g., a sample at a center location of the current coding unit 600) to determine a coding unit at a certain location from among the plurality of the coding units 620a, 620b, and 620c determined by splitting the current coding unit 600 (e.g., a coding unit at a center location from among a plurality of split coding units). That is, the image decoding apparatus 100 may determine the sample at the certain location by considering a block shape of the current coding unit 600, may determine the coding unit 620b including a sample, from which certain information (e.g., the split shape mode information) may be obtained, from among the plurality of coding units 620a, 620b, and 620c determined by splitting the current coding unit 600, and may put a certain restriction on the coding unit 620b. Referring to FIG. 6, according to an embodiment, the image decoding apparatus 100 may determine the sample 640 at the center location of the current coding unit 600 as the sample from which the certain information may be obtained, and may put a certain restriction on the coding unit 620b including the sample 640, in a decoding operation. However, the location of the sample from which the certain information may be obtained is not limited to the above-described location, and may include arbitrary locations of samples included in the coding unit 620b to be determined for a restriction.

According to an embodiment, the location of the sample from which the certain information may be obtained may be determined based on the shape of the current coding unit 600. According to an embodiment, the block shape information may indicate whether the current coding unit has a square or non-square shape, and the location of the sample from which the certain information may be obtained may be determined based on the shape. For example, the image decoding apparatus 100 may determine a sample located on a boundary for splitting at least one of a width or height of the current coding unit in half, as the sample from which the certain information may be obtained, by using at least one of information about the width of the current coding unit or information about the height of the current coding unit. As another example, when the block shape information about the current coding unit indicates a non-square shape, the image decoding apparatus 100 may determine one of samples adjacent to a boundary for splitting a long side of the current coding unit in half, as the sample from which the certain information may be obtained.

According to an embodiment, when the current coding unit is split into a plurality of coding units, the image decoding apparatus 100 may use the split shape mode information so as to determine a coding unit at a certain location from among the plurality of coding units. According to an embodiment, the image decoding apparatus 100 may obtain the split shape mode information from a sample at a certain location in a coding unit, and may split the plurality of coding units, which are generated by splitting the current coding unit, by using the split shape mode information, which is obtained from the sample of the certain location in each of the plurality of coding units. That is, a coding unit may be recursively split based on the split shape mode information that is obtained from the sample at the certain location in each coding unit. An operation of recursively splitting a coding unit has been described above with reference to FIG. 5, and thus, detailed descriptions thereof are not provided here.

According to an embodiment, the image decoding apparatus 100 may determine one or more coding units by splitting the current coding unit, and may determine an order of decoding the one or more coding units, based on a certain block (e.g., the current coding unit).

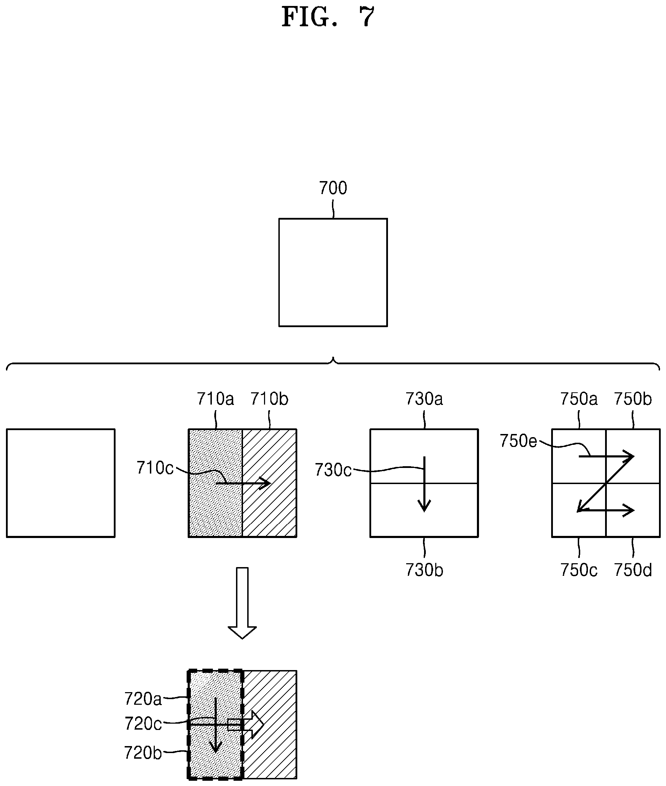

FIG. 7 illustrates an order of processing a plurality of coding units when an image decoding apparatus determines the plurality of coding units by splitting a current coding unit, according to an embodiment of the present disclosure.

According to an embodiment, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a, 750b, 750c, and 750d by splitting the first coding unit 700 in vertical and horizontal directions, based on split shape mode information.

Referring to FIG. 7, the image decoding apparatus 100 may determine to process the second coding units 710a and 710b that are determined by splitting the first coding unit 700 in a vertical direction, in a horizontal direction 710c. The image decoding apparatus 100 may determine to process the second coding units 730a and 730b that are determined by splitting the first coding unit 700 in a horizontal direction, in the vertical direction 730c. The image decoding apparatus 100 may determine to process the second coding units 750a, 750b, 750c, and 750d, which are determined by splitting the first coding unit 700 in vertical and horizontal directions, in a certain order 750e (e.g., in a raster scan order or Z-scan order) for processing coding units in a row and then processing coding units in a next row.

According to an embodiment, the image decoding apparatus 100 may recursively split coding units. Referring to FIG. 7, the image decoding apparatus 100 may determine the plurality of coding units 710a, 710b, 730a, 730b, 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a, 710b, 730a, 730b, 750a, 750b, 750c, and 750d may correspond to a splitting method of the first coding unit 700. Accordingly, each of the plurality of coding units 710a, 710b, 730a, 730b, 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment, the image decoding apparatus 100 may determine third coding units 720a and 720b by splitting the left second coding unit 710a in a horizontal direction, and may not split the right second coding unit 710b.

According to an embodiment, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction 720c. Because the left second coding unit 710a and the right second coding unit 710b are processed in the horizontal direction 710c, the right second coding unit 710b may be processed after the third coding units 720a and 720b included in the left second coding unit 710a are processed in the vertical direction 720c. A process of determining a processing order of coding units based on a coding unit before being split is described above and not limited to the above-described example, and it should be understood that various methods may be used to independently process coding units that are split into and determined to various shapes, in a certain order.

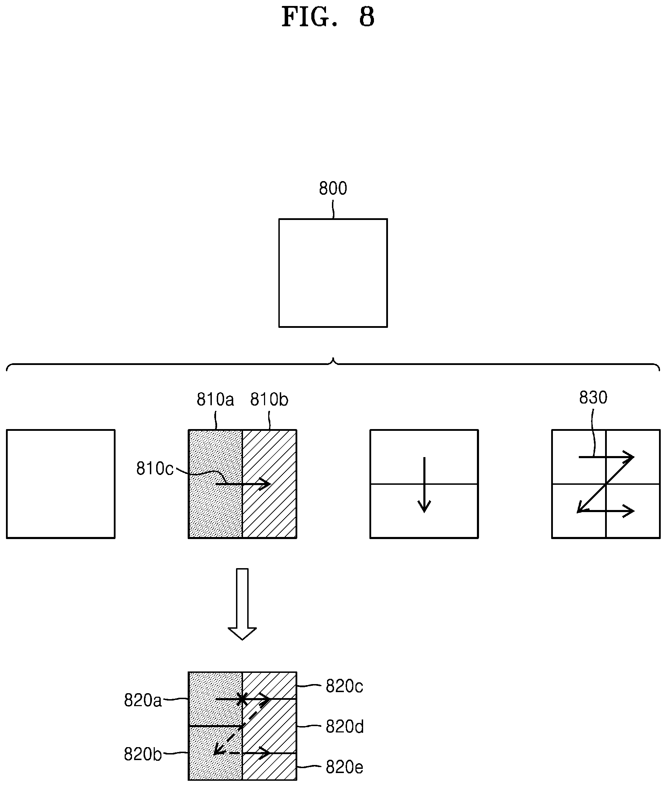

FIG. 8 illustrates a process, performed by an image decoding apparatus, of determining that a current coding unit is to be split into an odd number of coding units, when the coding units are not processable in a certain order, according to an embodiment of the present disclosure.

According to an embodiment, the image decoding apparatus 100 may determine whether the current coding unit is split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d and 820e. According to an embodiment, the image decoding apparatus 100 may determine the plurality of third coding units 820a and 820b by splitting the left second coding unit 810a in a horizontal direction, and may split the right second coding unit 810b into the odd number of third coding units 820c to 820e.

According to an embodiment, the image decoding apparatus 100 may determine whether there is any coding unit being split into an odd number of coding units, by determining whether the third coding units 820a and 820b, and 820c, 820d and 820e are processable in a certain order. Referring to FIG. 8, the image decoding apparatus 100 may determine the third coding units 820a and 820b, and 820c, 820d and 820e by recursively splitting the first coding unit 800. The image decoding apparatus 100 may determine whether any of the first coding unit 800, the second coding units 810a and 810b, and the third coding units 820a and 820b, and 820c, 820d and 820e are split into an odd number of coding units, based on at least one of the block shape information or the split shape mode information. For example, the right second coding unit 810b among the second coding units 810a and 810b may be split into an odd number of third coding units 820c, 820d, and 820e. A processing order of a plurality of coding units included in the first coding unit 800 may be a certain order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the certain order.

According to an embodiment, the image decoding apparatus 100 may determine whether the third coding units 820a and 820b, and 820c, 820d and 820e included in the first coding unit 800 satisfy the condition for processing in the certain order, and the condition relates to whether at least one of widths or heights of the second coding units 810a and 810b is split in half along a boundary of the third coding units 820a and 820b, and 820c, 820d and 820e. For example, the third coding units 820a and 820b that are determined when the height of the left second coding unit 810a of the non-square shape is split in half may satisfy the condition. The image decoding apparatus 100 may determine that the third coding units 820c, 820d, and 820e do not satisfy the condition because the boundaries of the third coding units 820c, 820d, and 820e that are determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is split into an odd number of coding units, based on a result of the determination. According to an embodiment, when a coding unit is split into an odd number of coding units, the image decoding apparatus 100 may put a certain restriction on a coding unit at a certain location from among the split coding units, and the restriction or the certain location is described above in various embodiments, and thus, detailed descriptions thereof are not provided here.

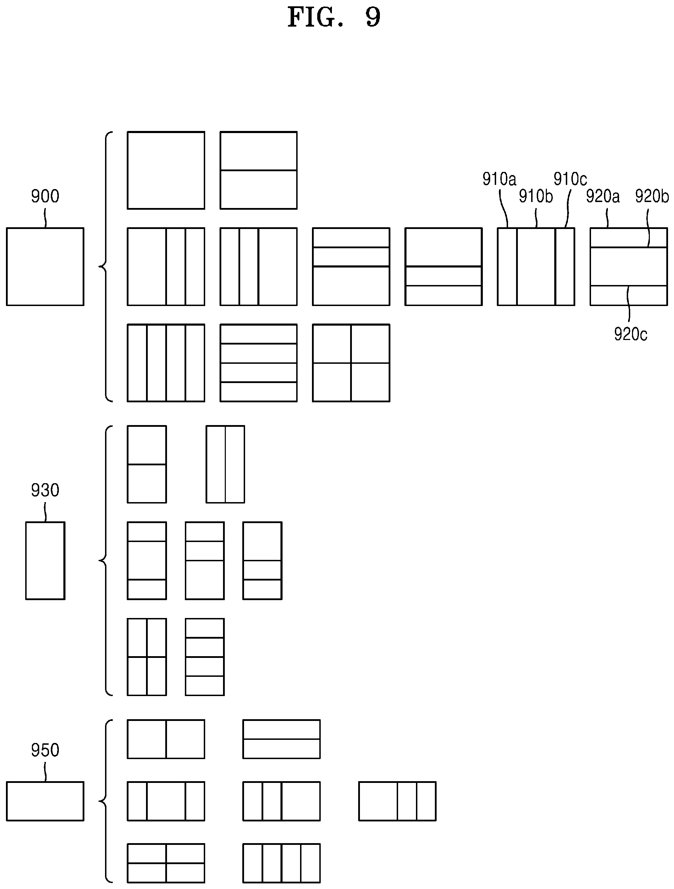

FIG. 9 illustrates a process, performed by an image decoding apparatus, of determining at least one coding unit by splitting a first coding unit, according to an embodiment of the present disclosure.

According to an embodiment, the image decoding apparatus 100 may split the first coding unit 900, based on split shape mode information obtained through the receiver 110. The square first coding unit 900 may be split into four square coding units, or may be split into a plurality of non-square coding units. For example, referring to FIG. 9, when the split shape mode information indicates to split the first coding unit 900 into non-square coding units, the image decoding apparatus 100 may split the first coding unit 900 into a plurality of non-square coding units. Specifically, when the split shape mode information indicates to determine an odd number of coding units by splitting the first coding unit 900 in a horizontal direction or a vertical direction, the image decoding apparatus 100 may split the square first coding unit 900 into an odd number of coding units that are second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding apparatus 100 may determine whether the second coding units 910a, 910b, 910c, 920a, 920b, and 920c included in the first coding unit 900 satisfy a condition for processing in a certain order, and the condition relates to whether at least one of a width or height of the first coding unit 900 is split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, the image decoding apparatus 100 may determine that the first coding unit 900 does not satisfy the condition for processing in the certain order. In addition, because boundaries of the second coding units 920a, 920b, and 920c determined by splitting the square first coding unit 900 in a horizontal direction do not split the height of the first coding unit 900 in half, the image decoding apparatus 100 may determine that the first coding unit 900 does not satisfy the condition for processing in the certain order. When the condition is not satisfied as described above, the image decoding apparatus 100 may determine disconnection of a scan order, and may determine that the first coding unit 900 is split into an odd number of coding units, based on a result of the determination. According to an embodiment, when a coding unit is split into an odd number of coding units, the image decoding apparatus 100 may put a certain restriction on a coding unit at a certain location from among the split coding units, and the restriction or the certain location is described above in various embodiments, and thus, detailed descriptions thereof are not provided here.

According to an embodiment, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

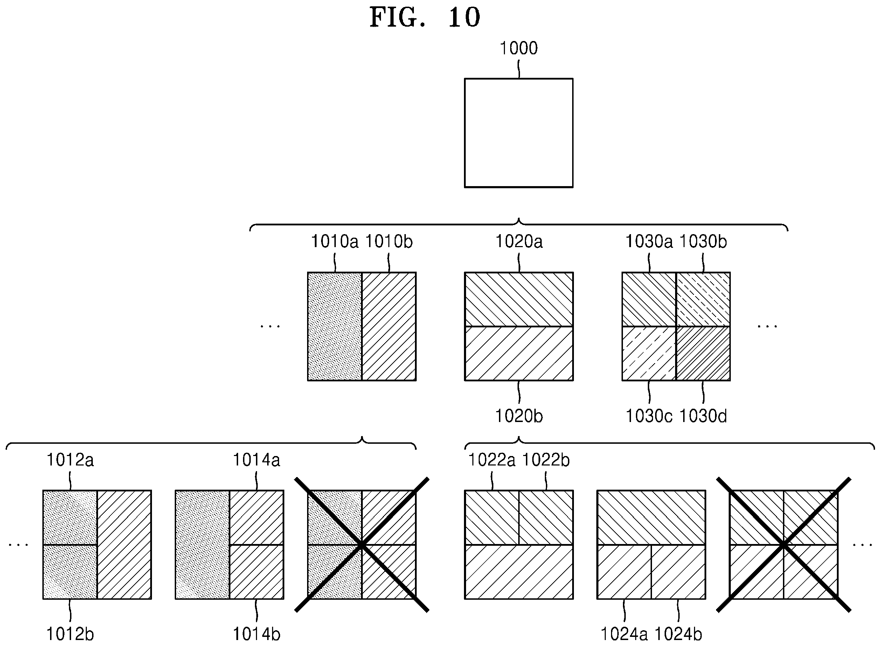

FIG. 10 illustrates that a shape into which a second coding unit is splittable is restricted when the second coding unit having a non-square shape, which is determined when an image decoding apparatus splits a first coding unit, satisfies a certain condition, according to an embodiment of the present disclosure.

According to an embodiment, the image decoding apparatus 100 may determine to split a square first coding unit 1000 into non-square second coding units 1010a, 1010b, 1020a, and 1020b, based on split shape mode information obtained through the receiver 110. The second coding units 1010a, 1010b, 1020a, and 1020b may be independently split. Accordingly, the image decoding apparatus 100 may determine to split or not to split each of the second coding units 1010a, 1010b, 1020a, and 1020b into a plurality of coding units, based on the split shape mode information about each of the second coding units 1010a, 1010b, 1020a, and 1020b. According to an embodiment, the image decoding apparatus 100 may determine third coding units 1012a and 1012b by splitting the non-square left second coding unit 1010a that is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in the same direction, the left second coding unit 1010a and the right second coding unit 1010b are independently split in a horizontal direction such that the third coding units 1012a and 1012b or 1014a and 1014b may be determined. However, this has the same result as the image decoding apparatus 100 splitting the first coding unit 1000 into four square second coding units 1030a, 1030b, 1030c, and 1030d based on the split shape mode information, and may be inefficient in terms of image decoding.

According to an embodiment, the image decoding apparatus 100 may determine third coding units 1022a and 1022b or 1024a and 1024b by splitting the non-square second coding unit 1020a or 1020b which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

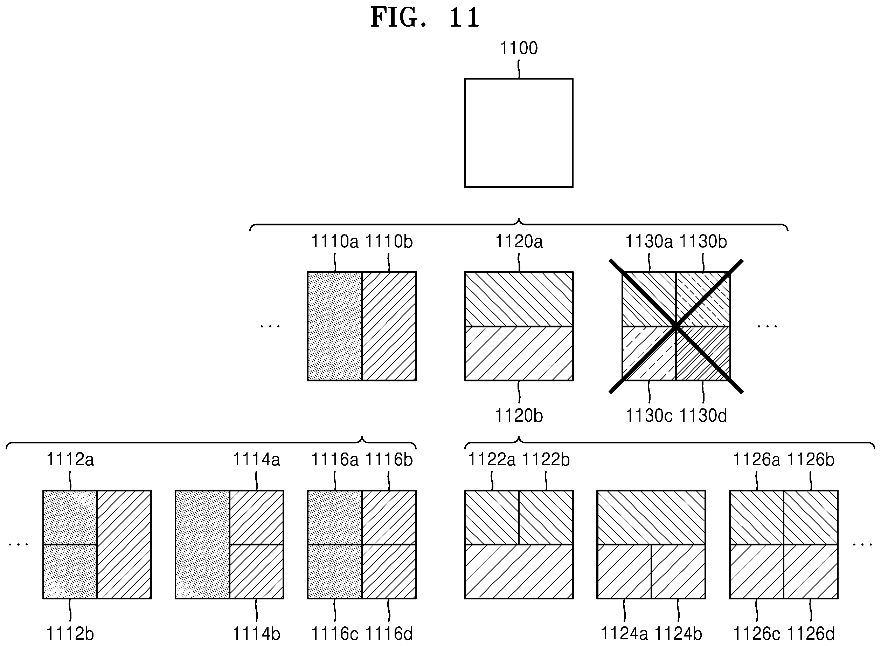

FIG. 11 illustrates a process, performed by an image decoding apparatus, of splitting a square coding unit when split shape mode information is unable to indicate that the square coding unit is split into four square coding units, according to an embodiment of the present disclosure.

According to an embodiment, the image decoding apparatus 100 may determine second coding units 1110a, 1110b, 1120a, 1120b, etc. by splitting a first coding unit 1100, based on split shape mode information. The split shape mode information may include information about various methods of splitting a coding unit, but the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. Based on the split shape mode information, the image decoding apparatus 100 may determine the non-square second coding units 1110a, 1110b, 1120a, 1120b, etc.

According to an embodiment, the image decoding apparatus 100 may independently split the non-square second coding units 1110a, 1110b, 1120a, 1120b, etc. Each of the second coding units 1110a, 1110b, 1120a, 1120b, etc. may be recursively split in a certain order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both of the upper and lower second coding units 1120a and 1120b in a vertical direction. In this case, coding units having the same shape as the four square second coding units 1130a, 1130b, 1130c, and 1130d split from the first coding unit 1100 may be determined.

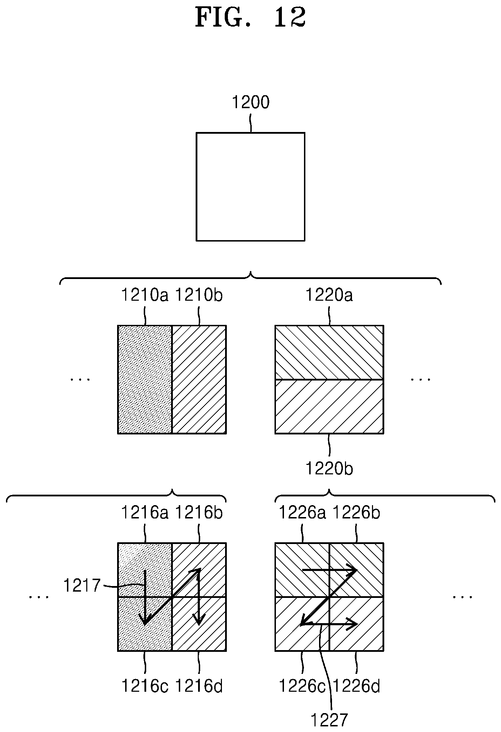

FIG. 12 illustrates that a processing order between a plurality of coding units may be changed depending on a process of splitting a coding unit, according to an embodiment of the present disclosure.

According to an embodiment, the image decoding apparatus 100 may split a first coding unit 1200, based on split shape mode information. When a block shape indicates a square shape and the split shape mode information indicates to split the first coding unit 1200 in at least one of a horizontal direction or a vertical direction, the image decoding apparatus 100 may determine second coding units (e.g., second coding units 1210a, 1210b, 1220a, 1220b, etc.) by splitting the first coding unit 1200. Referring to FIG. 12, the non-square second coding units 1210a, 1210b, 1220a, and 1220b determined by splitting the first coding unit 1200 in only a horizontal direction or vertical direction may be independently split based on the split shape mode information about each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a horizontal direction. A process of splitting the second coding units 1210a, 1210b, 1220a, and 1220b is described above with reference to FIG. 11, and thus, detailed descriptions thereof are not provided here.

According to an embodiment, the image decoding apparatus 100 may process coding units in a certain order. The characteristics of processing coding units in a certain order are described above with reference to FIG. 7, and thus, detailed descriptions thereof are not provided here. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment, the image decoding apparatus 100 may determine processing orders of the third coding units 1216a, 1216b, 1216c, and 1216d, and 1226a, 1226b, 1226c, and 1226d, based on a splitting method of the first coding unit 1200.

According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for first processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for first processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. The second coding units 1210a and 1210b determined by splitting the first coding unit 1200 in a vertical direction have different shapes from the second coding units 1220a and 1220b determined by splitting the first coding unit 1200 in a horizontal direction, but, according to the third coding units 1216a, 1216b, 1216c, and 1216d, and 1226a, 1226b, 1226c, and 1226d which are determined thereafter, the first coding unit 1200 is eventually split into coding units of the same shape. Accordingly, by recursively splitting a coding unit through different processes based on the split shape mode information, even though coding units having the same shape are eventually determined, the image decoding apparatus 100 may process the plurality of coding units determined to have the same shape in different orders.

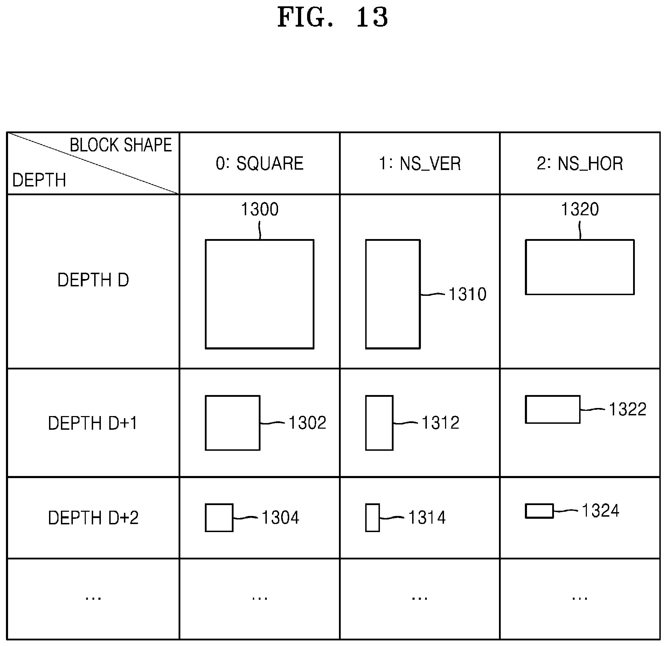

FIG. 13 illustrates a process of determining a depth of a coding unit as a shape and size of the coding unit change, when the coding unit is recursively split such that a plurality of coding units are determined, according to an embodiment of the present disclosure.

According to an embodiment, the image decoding apparatus 100 may determine the depth of the coding unit, based on a certain criterion. For example, the certain criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. Hereinafter, a coding unit having an increased depth is expressed as a coding unit of a lower depth.

Referring to FIG. 13, according to an embodiment, the image decoding apparatus 100 may determine a second coding unit 1302 and a third coding unit 1304 of lower depths by splitting a square first coding unit 1300 based on block shape information indicating a square shape (e.g., the block shape information may be expressed as '0: SQUARE'). Assuming that the size of the square first coding unit 1300 is $2N \times 2N$, the second coding unit 1302 determined by splitting a width and height of the first coding unit 1300 in 1/2 may have a size of $N \times N$. Furthermore, the third coding unit 1304 determined by splitting a width and height of the second coding unit 1302 in 1/2 may have a size of $N/2 \times N/2$. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (e.g., the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit (e.g., the second coding unit 1302, 1312, or 1322) by splitting at least one of a width or a height of the first coding unit 1310 having a size of $N \times 2N$. That is, the image decoding apparatus 100 may determine the second coding unit 1302 having a size of $N \times N$ or the second coding unit 1322 having a size of $N \times N/2$ by splitting the first coding unit 1310 in a horizontal direction, or may determine the second coding unit 1312 having a size of $N/2 \times N$ by splitting the first coding unit 1310 in horizontal and vertical directions.

According to an embodiment, the image decoding apparatus 100 may determine the second coding unit (e.g., the second coding unit 1302, 1312, or 1322) by splitting at least one of a width or a height of the first coding unit 1320 having a size of $2N \times N$. That is, the image decoding apparatus 100 may determine the second coding unit 1302 having a size of $N \times N$ or the second coding unit 1312 having a size of $N/2 \times N$ by splitting the first coding unit 1320 in a vertical direction, or may determine the second coding unit 1322 having a size of $N \times N/2$ by splitting the first coding unit 1320 in horizontal and vertical directions.

According to an embodiment, the image decoding apparatus 100 may determine a third coding unit (e.g., the third coding unit 1304, 1314, or 1324) by splitting at least one of a width or a height of the second coding unit 1302 having a size of N×N. That is, the image decoding apparatus 100 may determine the third coding unit 1304 having a size of N/2×N/2, the third coding unit 1314 having a size of N/4×N/2, or the third coding unit 1324 having a size of N/2×N/4 by splitting the second coding unit 1302 in vertical and horizontal directions.

According to an embodiment, the image decoding apparatus 100 may determine the third coding unit (e.g., the third coding unit 1304, 1314, or 1324) by splitting at least one of a width or a height of the second coding unit 1312 having a size of N/2×N. That is, the image decoding apparatus 100 may determine the third coding unit 1304 having a size of N/2×N/2 or the third coding unit 1324 having a size of N/2×N/4 by splitting the second coding unit 1312 in a horizontal direction, or may determine the third coding unit 1314 having a size of N/4×N/2 by splitting the second coding unit 1312 in vertical and horizontal directions.

According to an embodiment, the image decoding apparatus 100 may determine the third coding unit (e.g., the third coding unit 1304, 1314, or 1324) by splitting at least one of a width or a height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment, the image decoding apparatus 100 may split the square coding unit (e.g., the square coding unit 1300, 1302, or 1304) in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment, when a depth is determined based on the length of the longest side of a coding unit, a depth of a coding unit determined by splitting the first coding unit 1300 having a size of 2N×2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

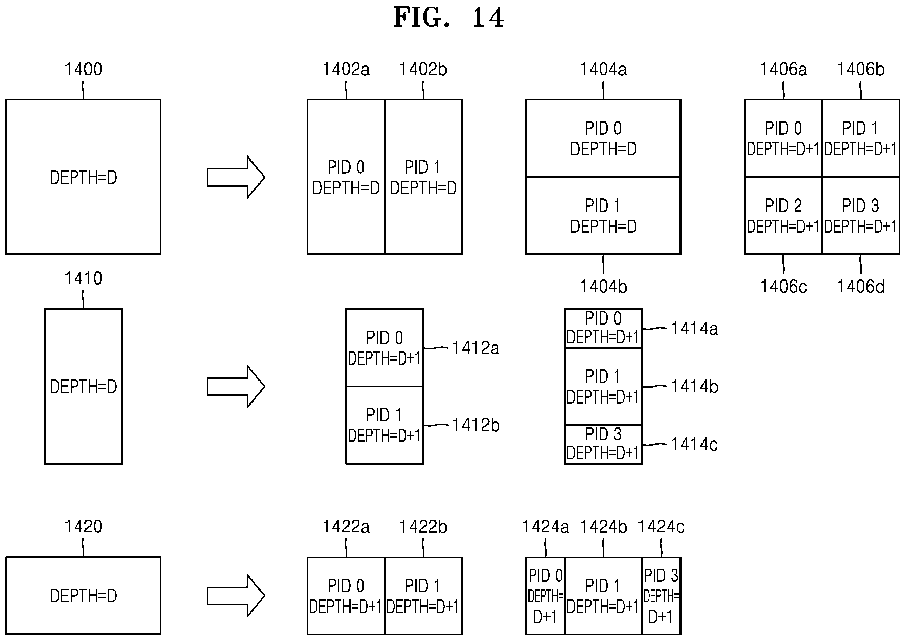

FIG. 14 illustrates depths that are determinable based on shapes and sizes of coding units, and part indexes (PIDs) that are for distinguishing the coding units, according to an embodiment of the present disclosure.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of a vertical direction or a horizontal direction based on split shape mode information. That is, the image decoding apparatus 100 may determine the second coding units 1402a and 1402b, 1404a and 1404b, and 1406a, 1406b, 1406c, and 1406d, based on the split shape mode information about the first coding unit 1400.

According to an embodiment, depths of the second coding units 1402a and 1402b, 1404a and 1404b, and 1406a, 1406b, 1406c, and 1406d, which are determined based on the split shape mode information about the square first coding unit 1400, may be determined based on the length of a long side thereof. For example, because the length of a side of the square first coding unit 1400 is the same as the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, depths of the second coding units 1406a, 1406b, 1406c, and 1406d may be D+1 which is lower than the depth D of the first coding unit 1400 by 1.

According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, depths of the second coding units 1412a and 1412b, and 1414a, 1414b, and 1414c, or 1422a and 1422b, and 1424a, 1424b, and 1424c that are determined based on the split shape mode information about the non-square first coding unit 1410 or 1420 may be determined based on the length of a long side thereof. For example, because the length of a side of the square second coding units 1412a and 1412b is 1/2 times the length of a long side of the first coding unit 1410 having a non-square shape, a height of which is longer than a width, depths of the square second coding units 1412a and 1412b is D+1 which is lower than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, depths of the second coding units 1414a, 1414b, and 1414c may be D+1 which is lower than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment, the image decoding apparatus 100 may determine PIDs for identifying split coding units, based on a size ratio between the coding units when an odd number of split coding units do not have the same size. Referring to FIG. 14, a coding unit 1414b of a center location among an odd number of split coding units 1414a, 1414b, and 1414c may have the same width as those of the other coding units 1414a and 1414c and a height which is two times those of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus, may be 3. That is, discontinuity in PID values may be present. According to an embodiment, the image decoding apparatus 100 may determine whether an odd number of split coding units do not have equal sizes, based on whether discontinuity is present in PIDs for identifying the split coding units.

According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment, the PID may be obtained from a sample of a certain location of each coding unit (e.g., an upper left sample).

According to an embodiment, the image decoding apparatus 100 may determine a coding unit at a certain location from among the split coding units, by using the PIDs for distinguishing the coding units. According to an embodiment, when the split shape mode information about the first coding unit 1410 having a rectangular shape, a height of which is longer than a width, indicates to split a coding unit into three coding units, the image decoding apparatus 100 may split the first coding unit 1410 into the three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units so as to determine a coding unit at a center location from among the coding units. The image decoding apparatus 100 may determine the coding unit 1414b having a PID corresponding to a middle value among the PIDs of the coding units, as the coding unit at the certain location from among the coding units determined by splitting the first coding unit 1410. According to an embodiment, the image decoding apparatus 100 may determine PIDs for distinguishing split coding units, based on a size ratio between the coding units when the split coding units do not have the same size. Referring to FIG. 14, the coding unit 1414b generated by splitting the first coding unit 1410 may have the same width as those of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus, may be 3. When the PID is not uniformly increased as described above, the image decoding apparatus 100 may determine that a coding unit is split into a plurality of coding units including a coding unit having a size different from that of the other coding units. According to an embodiment, when the split shape mode information indicates to split a coding unit into an odd number of coding units, the image decoding apparatus 100 may split a current coding unit in such a manner that a coding unit of a certain location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the certain location are specified to describe an embodiment, and thus, are not limited to the above-described examples, and various PIDs and various locations and sizes of coding units may be used.

According to an embodiment, the image decoding apparatus 100 may use a certain data unit where a coding unit starts to be recursively split.

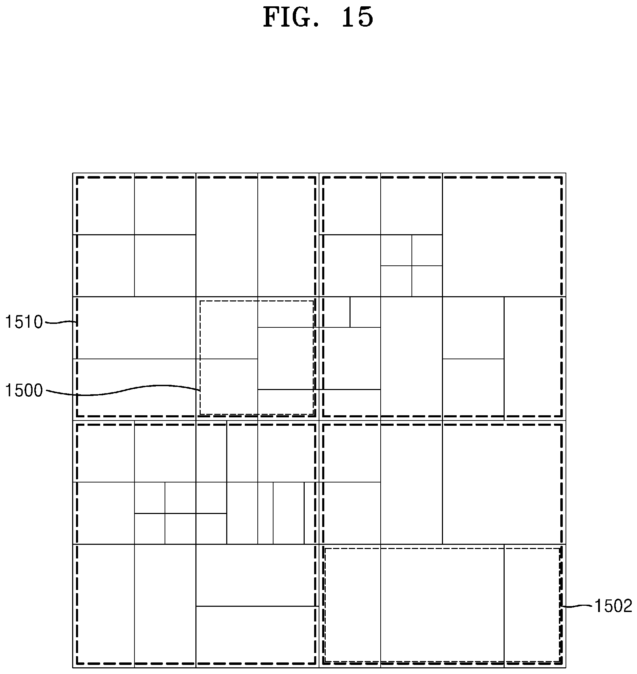

FIG. 15 illustrates that a plurality of coding units are determined based on a plurality of certain data units included in a picture, according to an embodiment of the present disclosure.

According to an embodiment, a certain data unit may be defined as a data unit where a coding unit starts to be recursively split by using split shape mode information. That is, the certain data unit may correspond to a coding unit of an uppermost depth, which is used to determine a plurality of coding units split from a current picture. Hereinafter, for convenience of description, the certain data unit is referred to as a reference data unit.

According to an embodiment, the reference data unit may have a certain size and a certain size shape. According to an embodiment, the reference data unit may include M×N samples. Herein, M and N may be equal to each other, and may be integers expressed as powers of 2. That is, the reference data unit may have a square or non-square shape, and may be then split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information about each reference data unit. The process of splitting the reference data unit may correspond to a splitting process using a quadtree structure.

According to an embodiment, the image decoding apparatus 100 may previously determine the smallest size allowed for the reference data units included in the current picture. Accordingly, the image decoding apparatus 100 may determine various reference data units having sizes equal to or greater than the smallest size, and may determine one or more coding units by using the split shape mode information with respect to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, largest coding units, etc.)

According to an embodiment, the receiver 110 of the image decoding apparatus 100 may obtain, from a bitstream, at least one of reference coding unit shape information or reference coding unit size information with respect to each of the various data units. A process of splitting the square reference coding unit 1500 into one or more coding units is described above with reference to the process of splitting the current coding unit 300 of FIG. 3, and a process of splitting the non-square reference coding unit 1502 into one or more coding units is described above with reference to the process of splitting the current coding unit 400 or 450 of FIG. 4, and thus, detailed descriptions thereof are not provided here.

According to an embodiment, the image decoding apparatus 100 may use a PID for identifying the size and shape of reference coding units, to determine the size and shape of reference coding units according to some data units previously determined based on a certain condition. That is, the receiver 110 may obtain, from the bitstream, only the PID for identifying the size and shape of reference coding units with respect to each slice, slice segment, tile, tile group, or largest coding unit which is a data unit satisfying a certain condition (e.g., a data unit having a size equal to or smaller than a slice) among the various data units (e.g., sequences, pictures, slices, slice segments, tiles, tile groups, largest coding units, etc.) The image decoding apparatus 100 may determine the size and shape of reference data units with respect to each data unit, which satisfies the certain condition, by using the PID. When the reference coding unit shape information and the reference coding unit size information are obtained and used from the bitstream according to each data unit having a relatively small size, efficiency of using the bitstream may not be high, and thus, only the PID may be obtained and used instead of directly obtaining the reference coding unit shape information and the reference coding unit size information. In this case, at least one of the size or shape of reference coding units corresponding to the PID for identifying the size and shape of reference coding units may be previously determined. That is, the image decoding apparatus 100 may determine at least one of the size or the shape of reference coding units included in a data unit serving as a unit for obtaining the PID, by selecting the previously determined at least one of the size or the shape of reference coding units based on the PID.

According to an embodiment, the image decoding apparatus 100 may use one or more reference coding units included in a largest coding unit. That is, a largest coding unit split from a picture may include one or more reference coding units, and coding units may be determined by recursively splitting each reference coding unit. According to an embodiment, at least one of a width or a height of the largest coding unit may be integer times at least one of the width or the height of the reference coding units. According to an embodiment, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information or the split shape mode information according to various embodiments.

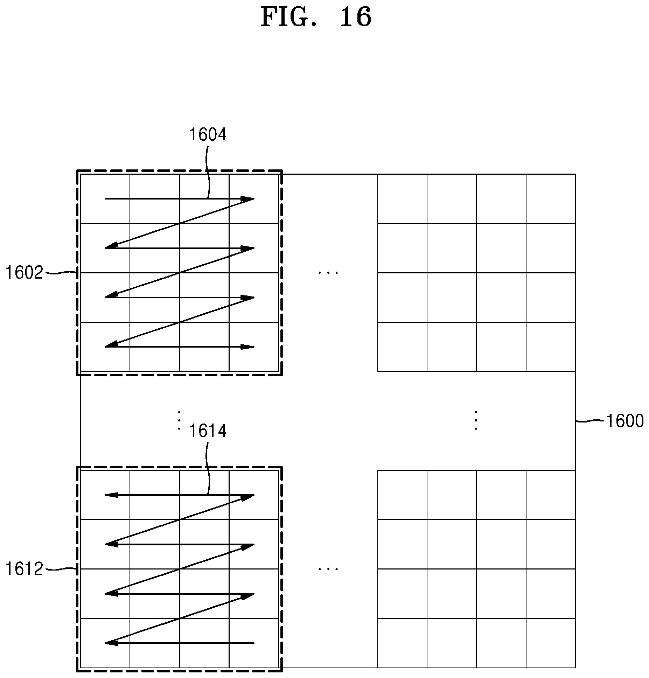

FIG. 16 illustrates a processing block serving as a unit for determining a determination order of reference coding units included in a picture, according to an embodiment of the present disclosure.

According to an embodiment, the image decoding apparatus 100 may determine one or more processing blocks split from a picture. The processing block is a data unit including one or more reference coding units split from a picture, and the one or more reference coding units included in the processing block may be determined according to a specific order. That is, a determination order of one or more reference coding units determined in each processing block may correspond to one of various types of orders for determining reference coding units, and may vary depending on the processing block. The determination order of reference coding units, which is determined with respect to each processing block, may be one of various orders, e.g., raster scan order, Z-scan, N-scan, up-right diagonal scan, horizontal scan, and vertical scan, but is not limited to the above-described scan orders.

According to an embodiment, the image decoding apparatus 100 may obtain processing block size information and may determine the size of one or more processing blocks included in the picture. The image decoding apparatus 100 may obtain the processing block size information from a bitstream and may determine the size of one or more processing blocks included in the picture. The size of processing blocks may be a certain size of data units, which is indicated by the processing block size information.

According to an embodiment, the receiver 110 of the image decoding apparatus 100 may obtain the processing block size information from the bitstream according to each specific data unit. For example, the processing block size information may be obtained from the bitstream in a data unit such as an image, sequence, picture, slice, slice segment, tile, or tile group. That is, the receiver 110 may obtain the processing block size information from the bitstream according to each of the various data units, and the image decoding apparatus 100 may determine the size of one or more processing blocks, which are split from the picture, by using the obtained processing block size information. The size of the processing blocks may be integer times that of the reference coding units.

According to an embodiment, the image decoding apparatus 100 may determine the size of processing blocks 1602 and 1612 included in the picture 1600. For example, the image decoding apparatus 100 may determine the size of processing blocks based on the processing block size information obtained from the bitstream. Referring to FIG. 16, according to an embodiment, the image decoding apparatus 100 may determine a width of the processing blocks 1602 and 1612 to be four times the width of the reference coding units, and may determine a height of the processing blocks 1602 and 1612 to be four times the height of the reference coding units. The image decoding apparatus 100 may determine a determination order of one or more reference coding units in one or more processing blocks.

According to an embodiment, the image decoding apparatus 100 may determine the processing blocks 1602 and 1612, which are included in the picture 1600, based on the size of processing blocks, and may determine a determination order of one or more reference coding units in the processing blocks 1602 and 1612. According to an embodiment, determination of reference coding units may include determination of the size of the reference coding units.

According to an embodiment, the image decoding apparatus 100 may obtain, from the bitstream, determination order information about one or more reference coding units included in one or more processing blocks, and may determine a determination order of one or more reference coding units based on the obtained determination order information. The determination order information may be defined as an order or direction for determining the reference coding units in the processing block. That is, the determination order of reference coding units may be independently determined with respect to each processing block.

According to an embodiment, the image decoding apparatus 100 may obtain, from the bitstream, the determination order information about reference coding units according to each specific data unit. For example, the receiver 110 may obtain the determination order information about reference coding units from the bitstream according to each data unit such as an image, sequence, picture, slice, slice segment, tile, tile group, or processing block. Because the determination order information about reference coding units indicates an order for determining reference coding units in a processing block, the determination order information may be obtained with respect to each specific data unit including an integer number of processing blocks.

According to an embodiment, the image decoding apparatus 100 may determine one or more reference coding units based on the determined determination order

According to an embodiment, the receiver 110 may obtain the determination order information about reference coding units from the bitstream as information related to the processing blocks 1602 and 1612, and the image decoding apparatus 100 may determine a determination order of one or more reference coding units included in the processing blocks 1602 and 1612 and determine one or more reference coding units, which are included in the picture 1600, based on the determination order. Referring to FIG. 16, the image decoding apparatus 100 may determine determination orders 1604 and 1614 of one or more reference coding units in the processing blocks 1602 and 1612, respectively. For example, when the determination order information about reference coding units is obtained for each processing block, determination orders of reference coding units related to the processing blocks 1602 and 1612 may be different for each processing block. When the determination order 1604 of reference coding units in the processing block 1602 is a raster scan order, reference coding units included in the processing block 1602 may be determined according to the raster scan order. On the contrary, when the determination order 1614 of reference coding units in the other processing block 1612 is a backward raster scan order, reference coding units included in the processing block 1612 may be determined according to the backward raster scan order.

According to an embodiment, the image decoding apparatus 100 may decode the determined one or more reference coding units. The image decoding apparatus 100 may decode an image, based on the reference coding units determined in the embodiment described above. A method of decoding the reference coding units may include various image decoding methods.

According to an embodiment, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each largest coding unit, each reference coding unit, or each processing block, and may use the obtained syntax element.

Hereinafter, a method of determining a split rule according to an embodiment of the present disclosure will be described in detail.

The image decoding apparatus 100 may determine a split rule of an image. The split rule may be predetermined between the image decoding apparatus 100 and the image encoding apparatus 2200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, shape, a ratio of width and height, and a direction of the coding unit. The image encoding apparatus 2200 and the image decoding apparatus 100 may pre-determine to determine the split rule based on the block shape of the coding unit. However, the present disclosure is not limited thereto. The image decoding apparatus 100 may determine the split rule based on the information obtained from the bitstream received from the image encoding apparatus 2200.

The shape of the coding unit may include a square and a non-square. When the lengths of the width and height of the coding unit are the same, the image decoding apparatus 100 may determine the shape of the coding unit to be a square. In addition, when the lengths of the width and height of the coding unit are not the same, the image decoding apparatus 100 may determine the shape of the coding unit to be a non-square.

The size of the coding unit may include various sizes such as 4x4, 8x4, 4x8, 8x8, 16x4, 16x8, ... , 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. In addition, the image decoding apparatus 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, etc. In addition, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule predetermined between the image encoding apparatus 2200 and the image decoding apparatus 100. In addition, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

In addition, the image decoding apparatus 100 may determine the split rule such that coding units generated through different splitting paths do not have the same block shape. However, the present disclosure is not limited thereto, and the coding units generated through different splitting paths have the same block shape. The coding units generated through the different splitting paths may have different decoding processing orders. The decoding processing orders is described above with reference to FIG. 12, and thus, details thereof are not provided again.

FIG. 17 is a diagram for describing a method of performing chroma prediction using a cross-component linear model (CCLM) according to an embodiment of the present disclosure.

The CCLM is a method of predicting a chroma sample using linear relationships between luma samples and chroma samples. Referring to FIG. 17, neighboring areas adjacent to a current block are used to predict chroma samples of the current block from luma samples at colloacated positions of chroma samples. Linear parameters $\alpha$ and $\beta$ are derived through relationships between reference luma samples of a neighboring area 1740 of a current luma block 1720 and reference chroma samples of a neighboring area 1730 of a current chroma block 1710 corresponding to the current luma block 1720. As shown in Equation 1 below, a current chroma sample value of the current chroma block 1710 is predicted by applying derived parameter values to a current luma sample of the reconstructed current luma block 1720.

[Equation 1]

$$\text{Pred}_c[x, y] = \alpha \ x \ \text{Rec}_L'[x, y] + \beta$$

Here, $\text{Pred}_c[x, y]$ is a predicted sample value of the current chroma sample at an x, y coordinate position, $\text{Rec}_L'[x, y]$ is a reconstructed sample value of the current luma sample corresponding to the current chroma sample at the x, y coordinate position, $\alpha$ is a multiplication parameter, and $\beta$ is an addition parameter.

FIG. 18 is a diagram for describing a method of performing chroma prediction using a multi-model linear model (MMLM) according to an embodiment of the present disclosure.

Unlike a CCLM, the MMLM derives and uses two models from neighboring areas adjacent to a current block. Referring to FIG. 18, an average value of reference luma samples of the neighboring areas of a current luma block is used as a threshold, and samples are classified into two groups with respect to the threshold. Two linear models 1810 and 1820 are derived from the two groups through a least mean squared method. As shown in Equation 2 below, a current chroma sample of a current chroma block is predicted by applying a reconstructed current luma sample of the current luma block to the derived two linear models.

[Equation 2]

$$\text{Pred}_c[x, y] = \alpha_1 \ x \ \text{Rec}_L'[x, y] + \beta_1 \ \text{if} \ \text{Rec}_L'[x, y] <= \text{Threshold}$$

$$\text{Pred}_c[x, y] = \alpha_2 \ x \ \text{Rec}_L'[x, y] + \beta_2 \ \text{if} \ \text{Rec}_L'[x, y] > \text{Threshold}$$

In FIGS. 17 and 18 described above, the linear models of the CCLM and the MMLM are derived using the neighboring areas adjacent to the current block. A method of using areas other than neighboring areas adjacent to a current block when chroma prediction is performed using a correlation between a luma component and a chroma component will be described below with reference to FIG. 19.

FIG. 19 is a diagram for describing a method of performing chroma prediction using areas other than neighboring areas adjacent to a current block according to an embodiment of the present disclosure.

Referring to FIG. 19, the reference block indicated by a block vector or a motion vector of a current luma block 1920 corresponding to a current chroma block 1910, or a reference block most similar to a current luma block in an intra template matching prediction (TMP) of the current luma block 1920, or a reference neighboring area adjacent to the reference block are used. In order to derive a more accurate linear model, a linear model may be derived using an area different from a neighboring area.

For example, a reference luma block 1940 indicated by the current luma block 1920 and a reference chroma block 1930 corresponding thereto may be used as an area for deriving a linear model of a CCLM or an MMLM. Areas of the reference luma block 1940 and the reference chroma block 1930 may be wholly or partially used to derive the linear model.

In addition, a reference luma neighboring area 1945 adjacent to the reference luma block 1940 and a reference chroma neighboring area 1935 adjacent to the reference chroma block 1930 may be used as the area for deriving the linear model of the CCLM or the MMLM. Areas of the reference luma neighboring area 1945 and the reference chroma neighboring area 1935 may be wholly or partially used to derive the linear model.

In addition, the current luma block 1920 and the reference chroma block 1930 may be used as areas for deriving the linear model of the CCLM or the MMLM. The current luma block 1920 and the reference chroma block 1930 may be wholly or partially used to derive the linear model.

In addition, the reference luma neighboring area 1945 adjacent to the reference luma block 1940 and a current chroma neighboring area 1915 adjacent to the current chroma block 1910 may be used as the areas for deriving the linear model of the CCLM or the MMLM. The reference luma neighboring area 1945 adjacent to the reference luma block 1940 and the current chroma neighboring area 1915 adjacent to the current chroma block 1910 may be wholly or partially used to derive the linear model.

In addition, a current luma neighboring area 1925 adjacent to the current luma block 1920 and the reference chroma neighboring area 1935 may be used as the areas for deriving the linear model of the CCLM or the MMLM. The current luma neighboring area 1925 and the reference chroma neighboring area 1935 may be wholly or partially used to derive the linear model.

In addition, neighboring blocks (prediction units or coding units) reconstructed before the current block may be used to derive the linear model of the CCLM or the MMLM. For example, neighboring blocks may include spatially adjacent blocks, non-adjacent blocks, or historical candidates (candidates included in a history-based motion vector list). The non-adjacent block may be, for example, a temporal candidate block that is not spatially adjacent. The history-based motion vector list is a list including blocks reconstructed before the current block.

FIG. 20 is a diagram for describing a method of performing chroma prediction using a convolutional cross-component model (CCCM) according to an embodiment of the present disclosure.

The CCCM predicts chroma samples Cb and Cr by applying a 7-tap filter to reconstructed luma samples. Referring to FIG. 20, the CCCM uses a current luma sample 2000 corresponding to a current chroma sample to be predicted, a top luma sample 2001 located on the top or north of the current luma sample 2000, a right luma sample 2002 located on the right or east of the current luma sample 2000, a bottom luma sample 2003 located on the bottom or south of the current luma sample 2000, and a left luma sample 2004 located on the left or west of the current luma sample 2000.

In addition, a nonlinear term is used. The nonlinear term is expressed in the power of the current luma sample 2000 as shown in Equation 3 below and scaled to a sample value range of content.

$$[\text{Equation 3}]$$

$$P = (C*C + midVal) >> bitDepth$$

Here, P is the nonlinear term, C is a current luma sample, midVal is an intermediate chroma value, and bitDepth is a bit depth of the content.

In addition, a bias term is used, which indicates a scalar offset between input and output, and is set to the intermediate chroma value (e.g., 512 for 10 bits).

The output of a filter of the CCCM is calculated by convolution between a filter coefficient $c_i$ and an input value as shown in Equation 4 below and clipped to a valid chroma sample range.

$$[\text{Equation 4}]$$

$$predChromaVal = c_0C + c_1N + c_2S + c_3E + c_4W + c_5P + c_6B$$

Here, C is a current luma sample, N is a top luma sample, S is a bottom luma sample, E is a right luma sample, W is a left luma sample, P is the nonlinear term, and B is the bias term.

The filter coefficient values $c_i$ used in Equation 4 are derived through relationships between reference luma samples of a neighboring area 2020 adjacent to a current luma block 2010 and chroma samples corresponding to the reference luma samples. In addition, a separate coefficient value is calculated for each of the color difference components Cb and Cr.

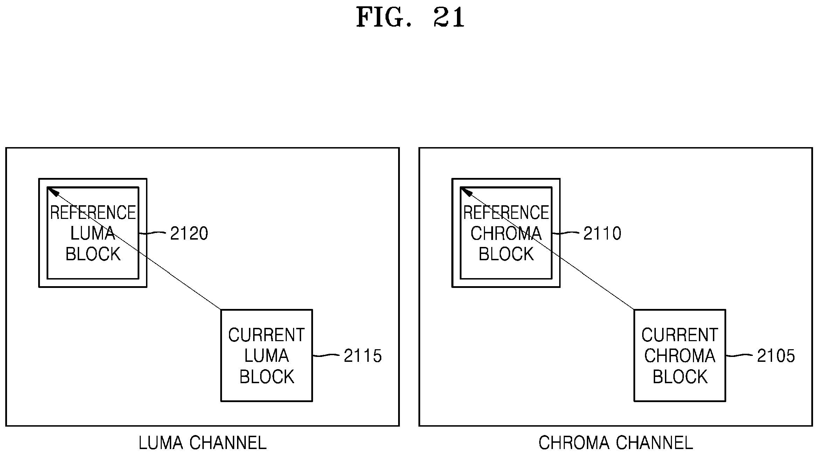

In FIG. 20, the neighboring area of the current luma block is used for the CCCM, but other areas may be used when the current luma block has a block vector obtained through intra block copy or intra template matching prediction. This will be described below with reference to FIG. 21.

Intra block copy refers to a method of predicting a block by using a block of sample values in a current image (current picture, current frame, current slice, etc.) Information indicating this block is referred to as a block vector so as to be distinguished from a motion vector for motion compensation in the existing inter prediction.

Intra template matching prediction is a method of matching a plurality of areas of sizes corresponding to template areas adjacent to a current block in a reconstructed search area in a current image (current frame) including a current block, calculating a distortion cost, determining the best matching area, determining a matching block adjacent to the best matching area and corresponding to the current block, and predicting the current block by using the matching block. In this case, because the matching block is a block in the current image including the current block, information indicating such a matching block may be referred to as a block vector.

FIG. 21 is a diagram for describing a method of performing chroma prediction using a block vector guided convolution cross component model (BVG-CCCM) according to an embodiment of the present disclosure.

Referring to FIG. 21, when a current luma block 2115 corresponding to a current chroma block 2105 has a block vector, a reference luma area 2120 indicated by the block vector and a reference chroma area 2110 corresponding to the reference luma area 2120 are used to derive a coefficient of a filter.

As shown in Equation 5 below, the BVG-CCCM predicts a current chroma sample by applying an 11-tap filter to a reconstructed current luma sample.

$$predChromaVal = c_0C + c_1N + c_2S + c_3E + c_4W + c_5P(C) + c_6P(N) + c_7P(S) + c_8P(W)\, c_9P(E) + c_{10}B \qquad [\text{Equation 5}]$$

Here, C is the current luma sample, N is a top luma sample, S is a bottom luma sample, E is a right luma sample, W is a left luma sample, P(-) is a nonlinear term obtained as the square of the corresponding luma sample, and B is a bias term and is determined as an intermediate chroma value.

In addition, in deriving the coefficient of the filter, a reference luma neighboring area adjacent to the reference luma area 2120 and a reference chroma neighboring area adjacent to the reference chroma area 2110 may be used.

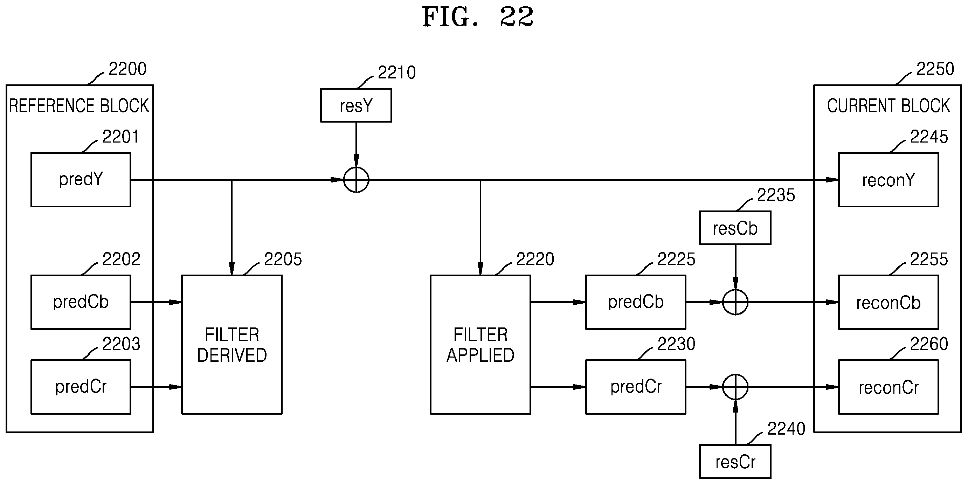

FIG. 22 is a diagram for describing a method of performing chroma prediction using a cross component residual model (CCRM) according to an embodiment of the present disclosure.

The CCRM uses reconstructed luma sample values to predict a chroma sample. When a current block 2250 is predicted through inter prediction or intra block copy, the current block 2250 has a motion vector or a block vector. In this case, a reference block indicated by the motion vector or the block vector is used as a prediction block. This is because the reference block indicated by the motion vector or the block vector is a block similar to the current block.

Referring to FIG. 22, in a reference block 2200 indicated by the motion vector or the block vector of the current block 2250, that is, prediction values for each component, i.e., a luma prediction value predY 2201, a first chroma prediction value predCb 2202, and a second chroma prediction value predCr 2203, are present. These correspond to a reconstructed luma sample, a reconstructed first chroma sample, and a reconstructed second chroma sample of the reference block 2200, and because the reference block indicated by the motion vector or the block vector is the block similar to the current block, the reconstructed luma and chroma sample values of the reference block 2200 may be used as luma and chroma prediction values of the current block 2250. An 8-tap filter is derived (2205) through the prediction values 2201, 2202, and 2203 for each component. The derived filter is applied (2220) to a luma reconstruction sample reconY 2245 in which a luma residual sample resY 2210 is added to the luma prediction value 2201. Because the derived filter is obtained through correlations of cross components, when the filter is applied to the luma reconstruction sample 2245, a first chroma prediction value 2225 and a second chroma prediction value 2230 of a current chroma block that are more accurate than the first chroma prediction value 2202 and the first chroma prediction value 2203 of the reference block 2220 are obtained. The current chroma block is reconstructed by obtaining a first chroma reconstruction sample reconCb 2255 by adding a first chroma residual sample resCb 2235 to the first chroma prediction value 2225, and obtaining a second chroma reconstruction sample reconCr 2260 by adding a second chroma residual sample resCr 2240 to the second chroma prediction value 2230.

A filter derivation process, a filter application process, and a luma and chroma sample reconstruction process described with reference to FIG. 22 may be equally applied to a BVG-CCCM except for a difference in a filter applied to a BVG-CCCM of FIG. 21.

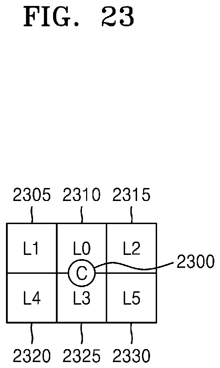

Hereinafter, positions of luma samples to which a filter of a CCRM is applied will be described below with reference to FIG. 23.

FIG. 23 is a diagram for describing positions of luma samples to which a filter of a CCRM is applied, according to an embodiment of the present disclosure.

Referring to FIG. 23, the luma samples to which the filter is applied in the CCRM include a current luma sample 2310 corresponding to a current chroma sample 2300 to be predicted, a left luma sample 2305 located on the left of the current luma sample 2310, a right luma sample 2315 located on the right of the current luma sample 2310, a bottom left luma sample 2320 located on the bottom left of the current luma sample 2310, a bottom luma sample 2325 located on the bottom of the current luma sample 2310, and a bottom right luma sample 2330 located on the bottom right of the current luma sample 2310. These indicate the luma samples to which the filter is applied to the current chroma sample 2300 in a color format of 4:2:0.

When coordinates of the current chroma sample 2300 are expressed as (x, y), coordinates of the current luma sample 2310 are (2x, 2y), coordinates of the left luma sample 2305 are (2x-1, 2y), coordinates of the right luma sample 2315 are (2x+1, 2y), coordinates of the bottom left luma sample 2320 are (2x-1, 2y+1), coordinates of the bottom luma sample 2325 are (2x, 2y+1), and coordinates of the bottom right luma sample 2330 are (2x+1, 2y+1).

The filter applied in the CCRM is an 8-tap filter, and as shown in Equation 6 below, a term for six reconstructed luma samples, one nonlinear term, and one bias term are used.

$$predChromaVal = c_0L0 + c_1L1 + c_2L2 + c_3L3 + c_4L4 + c_3L5 + c_6 \, nonlinear((L0+L3+1)>>1) + c_7B \qquad \text{[Equation 6]}$$

Here, $c_i$ is the filter coefficient value, L0 is a current luma sample corresponding to a current chroma sample, L1 is a left luma sample, L2 is a right luma sample, L3 is a bottom left luma sample, L4 is a bottom luma sample, L5 is a bottom right luma sample, B is a bias term and is determined as an intermediate chroma value.

The above-described BVG-CCCM and CCRM of FIGS. 21 to 23 derive a filter through correlations between reference luma sample values and reference chroma sample values of a reference area indicated by a block vector or a motion vector of a current block, and predicts a current chroma sample value of the current block by applying the derived filter to a reconstructed current luma sample of the current block. However, even though the correlations between the reference luma sample values and the reference chroma sample values in the reference area was properly inferred, the correlations may be slightly different from a correlation between the reconstructed current luma sample and the current chroma sample of the current block. Therefore, predicting the current chroma sample value by applying the derived filter to the reconstructed current luma sample of the current block may result in low accuracy.

To overcome this, a method of performing chroma prediction on a current block by considering a reference chroma sample value of a reference area together will be described with reference to FIG. 24.

FIG. 24 is a diagram for describing a method of performing chroma prediction using a luma residual sample of a current block and a reference chroma sample of a reference area according to an embodiment of the present disclosure.

Unlike the methods (BCG-CCCM and CCRM) of FIGS. 21 to 23 described above directly predicting a current chroma sample through a reconstructed current luma sample, the method of FIG. 24 derives a residual value of a current chroma sample through a residual value of a current luma sample, and predicts the chroma sample value for the current block by adding the derived residual value to a reference chroma sample value.

Compared to the methods of FIGS. 21 to 23 which do not directly use reference chroma samples while having high correlations between the chroma samples of the current block and the reference chroma samples of the reference area of the current block, whereas the method of FIG. 24 may increase the performance of chroma prediction by directly using reference chroma samples.

Referring to FIG. 24, in a reference block 2400 indicated by a motion vector or a block vector of a current block 2450, prediction values for each component, i.e., a luma prediction value predY 2401, a first chroma prediction value predCb 2402, and a second chroma prediction value predCr 2403, are present. These correspond to a reconstructed luma sample, a reconstructed first chroma sample, and a reconstructed second chroma sample of the reference block 2400, and because the reference block indicated by the motion vector or the block vector is the block similar to the current block, the reconstructed luma and chroma sample values of the reference block 2400 may be used as luma and chroma prediction values of the current block 2450. A filter is derived (2405) through the prediction values 2401, 2402, and 2403 for each component. The derived filter is applied (2420) to a luma residual sample resY 2410 with respect to the current block 2450. A first chroma predicted residual value predicted resCb 2421 and a second chroma predicted residual value predicted resCr 2422 are obtained through the filter. An enhanced first chroma prediction value enhanced predCb 2425 is obtained by adding the first chroma prediction value 2402 to the first chroma predicted residual value 2421, and an enhanced second chroma prediction value enhanced predCr 2430 is obtained by adding the second chroma prediction value 2403 to the second chroma predicted residual value 2422. The current chroma block is reconstructed by obtaining a first chroma reconstruction sample reconCb 2455 with respect to the current block 2450 by adding a first chroma residual sample resCb 2435 to the enhanced first chroma prediction value 2425, and obtaining a second chroma reconstruction sample reconCr 2460 with respect to the current block 2450 by adding a second chroma residual sample resCr 2440 to the enhanced second chroma prediction value 2430.

In addition, a luma reconstruction sample recon Y 2445 with respect to the current block 2450 is obtained by adding the current luma residual sample 2410 to the luma prediction value 2401.

To improve the performance of chroma prediction, more accurate chroma prediction values, that is, the enhanced chroma prediction values 2425 and 2430, are obtained by inferring the residual values 2421 and 2422 with respect to the chroma prediction samples 2402 and 2403 by applying the luma residual sample 2410 with respect to the current block 2450 to the filter, and respectively adding the residual values 2421 and 2422 to the chroma prediction samples 2402 and 2403. The method of FIG. 24 uses a highly correlated reference chroma value, and thus, higher compression efficiency may be expected than predicting a current chroma sample directly through a reconstructed current luma sample value.

In addition, to derive the filter, residual values of the reference luma sample and the reference chroma sample of the reference block 2400 may be used instead of the reference luma sample and the reference chroma sample of the reference block 2400. That is, the reference luma residual sample and the reference chroma residual samples used in a process of reconstructing the reference block 2400 are used for filter derivation. In this case, a filter for more elaborately predicting a residual value in the current block 2450 may be derived.

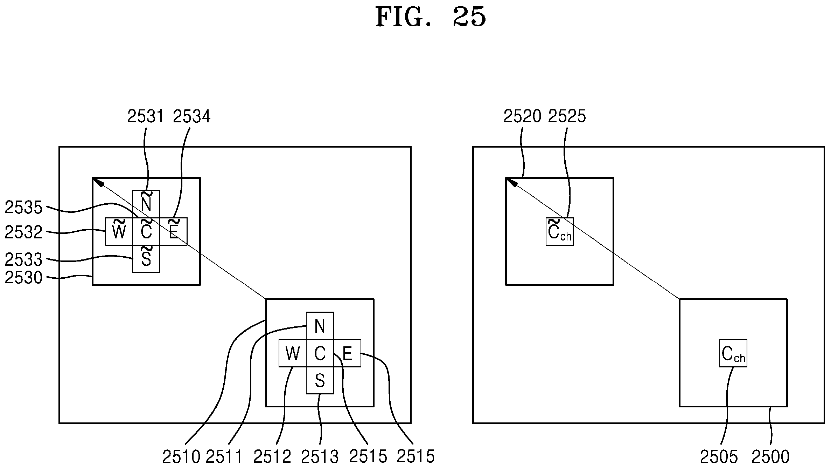

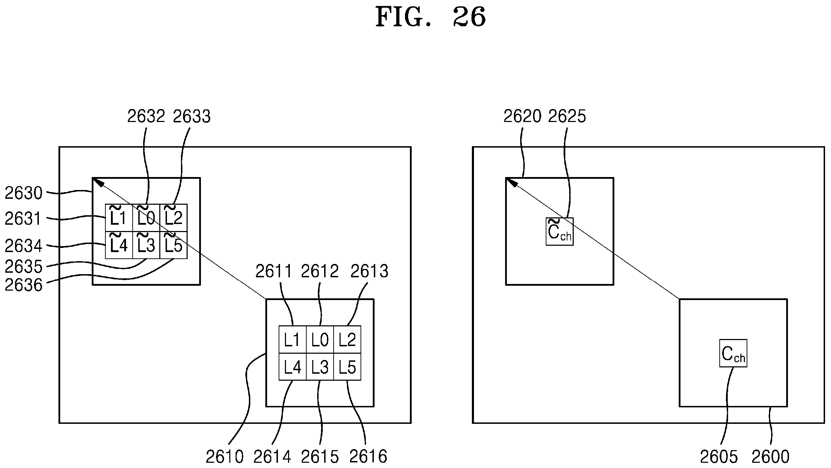

Hereinafter, FIG. 25 describes a method of performing chroma prediction through a BVG-CCCM by using the method of FIG. 24, and FIG. 26 describes a method of performing chroma prediction using a CCRM by using the method of FIG. 24.

FIG. 25 is a diagram for describing a method of performing chroma prediction using a luma residual sample of a current block and a reference chroma sample of a reference area in a BVG-CCCM according to an embodiment of the present disclosure.

Referring to FIG. 25, reference luma samples 2531, 2532, 2533, 2534, and 2535 of a reference luma block 2530 indicated by a block vector of a current luma block 2510 corresponding to a current chroma block 2500 and a reference chroma sample 2525 of a reference chroma block 2520 corresponding to the reference luma block 2530 are used to derive a filter. Specifically, a reference chroma sample $\tilde{C}_{ch}$ 2525, a reference luma sample $\tilde{C}$ 2535, a top reference luma sample $\tilde{N}$ 2531, a left reference luma sample $\tilde{W}$ 2532, a bottom reference luma sample $\tilde{S}$ 2533, and a right reference luma sample $\tilde{E}$ 2534 are used. The reference chroma sample 2525 is a chroma sample of the reference chroma block 2520 corresponding to a current chroma sample $C_{ch}$ 2505 of the current chroma block 2500. The reference luma sample 2535 is a luma sample of the reference luma block 2530 corresponding to a current luma sample C 2515 of the current luma block 2510. The top reference luma sample 2531 is a luma sample located on the top of the reference luma sample 2535. The left reference luma sample 2532 is a luma sample located on the left of the reference luma sample 2535. The bottom reference luma sample 2533 is a luma sample located on the bottom of the reference luma sample 2535. The right reference luma sample 2534 is a luma sample located on the right of the reference luma sample 2535. A filter for the BVG-CCCM is derived using the reference chroma sample $\tilde{C}_{ch}$ 2525, the reference luma sample $\tilde{C}$ 2535, the top reference luma sample $\tilde{N}$ 2531, the left reference luma sample $\bar{W}$ 2532, the bottom reference luma sample $\tilde{S}$ 2533, and the right reference luma sample $\tilde{E}$ 2534. Residual luma sample values of the current luma block 2510, i.e., the current luma sample C 2515, a top luma sample N 2511 located on the top of the current luma sample 2515, a left luma sample W 2512 located on the left of the current luma sample 2515, a bottom luma sample S 2513 located on the bottom of the current luma sample 2515, and a right luma sample E 2514 located on the right of the current luma sample 2515, are applied to the derived filter. The residual luma sample values applied to the filter are determined as shown in Equation 7 below.

residual luma sample values: $\Delta C = C - \tilde{C}$, $\Delta N = N - \tilde{N}$, $\Delta S = S - \tilde{S}$, $\Delta E = E - \tilde{E}$, $\Delta W = W - \bar{W}$          [Equation 7]

A chroma prediction residual value with respect to the current chroma sample is obtained by applying the residual luma sample values to the filter as shown in Equation 8 below.

predChromaResidualVal = $c_0\Delta C + c_1\Delta N + c_2\Delta S + c_3\Delta E + c_4\Delta W + c_5P(\Delta C) + c_6P(\Delta N) + c_7P(\Delta S) + c_8P(\Delta W) + c_9P(\Delta E) + c_{10}B$          [Equation 8]

As shown in Equation 9 below, a predicted value predChromaVal of the current chroma sample 2505 is obtained by adding the reference chroma sample 2525 to a chroma prediction residual value predChromaResidualVal obtained through the filter.

[Equation 9]

$$\mathrm{predChromaVal} = \tilde{C}_{ch} + \mathrm{predChromaResidualVal}$$

According to an embodiment, reference luma samples of a neighboring area of the reference luma block 2530 or a reference chroma sample of a neighboring area of the reference chroma block 2520 may be used to derive the filter.

FIG. 26 is a diagram for describing a method of performing chroma prediction using a luma residual sample of a current block and a reference chroma sample of a reference area in a CCRM according to an embodiment of the present disclosure.

Referring to FIG. 26, reference luma samples 2631, 2632, 2633, 2634, 2635, and 2636 of a reference luma block 2630 indicated by a block vector or a motion vector of a current luma block 2610 corresponding to a current chroma block 2600 and a reference chroma sample 2625 of a reference chroma block 2620 corresponding to the reference luma block 2630 are used to derive a filter. Specifically, a reference chroma sample $\tilde{C}_{ch}$ 2625, a left reference luma sample $\tilde{L}1$ 2631, a reference luma sample $\tilde{L}0$ 2632, a right reference luma sample $\tilde{L}2$ 2633, a bottom left reference luma sample $\tilde{L}4$ 2634, a bottom reference luma sample $\tilde{L}3$ 2635, and a bottom right reference luma sample $\tilde{L}5$ 2636 are used. The reference chroma sample 2625 is a chroma sample of the reference chroma block 2620 corresponding to a current chroma sample $C_{ch}$ 2605 of the current chroma block 2600. The reference luma sample 2632 is a luma sample of the reference luma block 2630 corresponding to a current luma sample L0 2612 of the current luma block 2610. The left reference luma sample 2631 is a luma sample located on the left of the reference luma sample 2632. The right reference luma sample 2633 is a luma sample located on the right of the reference luma sample 2632. The bottom left reference luma sample 2634 is a luma sample located in the bottom left of the reference luma sample 2632. The bottom reference luma sample 2635 is a luma sample located on the bottom of the reference luma sample 2632, and the bottom right reference luma sample 2636 is a luma sample located in the bottom right of the reference luma sample 2632. A filter for the CCRM is derived using the reference chroma sample $\tilde{C}_{ch}$ 2625, the left reference luma sample $\tilde{L}1$ 2631, the reference luma sample $\tilde{L}0$ 2632, the right reference luma sample $\tilde{L}2$ 2633, the bottom left reference luma sample $\tilde{L}4$ 2634, the bottom reference luma sample $\tilde{L}3$ 2635, and the bottom right reference luma sample $\tilde{L}5$ 2636. Residual luma sample values of luma samples of the reference luma block 2630, i.e., the current luma sample 2612, a left luma samples L1 2611 located on the left of the current luma sample 2612, a right luma sample L2 2613 located on the right of the current luma sample 2612, a bottom left luma sample L4 2614 located on the bottom left of the current luma sample 2612, a bottom luma sample L3 2615 located on the bottom of the current luma sample 2612, and a bottom right luma sample L5 2616 located on the bottom right of the current luma sample 2612, are applied to the derived filter. The residual luma sample values applied to the filter are determined as shown in Equation 10 below.

residual luma sample values: $\Delta L0 = L0 - \tilde{L}0$, $\Delta L1 = L1 - \tilde{L}1$, $\Delta L2 = L2 - \tilde{L}2$, $\Delta L3 = L3 - \tilde{L}3$, $\Delta L4 = L4 - \tilde{L}4$, $\Delta L5 = L5 - \tilde{L}5$ [Equation 10]

A chroma prediction residual value with respect to the current chroma sample is obtained by applying the residual luma sample values to the filter as shown in Equation 11 below.

predChromaResidualVal = $c_0\Delta L0 + c_1\Delta L1 + c_2\Delta L2 + c_3\Delta L3 + c_4\Delta L4 + c_5\Delta L5 + c_6$nonlinear$((\Delta L0 + \Delta L3 + 1) >> 1) + c_7 B$ [Equation 11]

As shown in Equation 12 below, a predicted value predChromaVal of the current chroma sample 2605 is obtained by adding the reference chroma sample 2625 to a chroma prediction residual value predChromaResidualVal obtained through the filter.

[Equation 12]

$$\text{predChromaVal} = \tilde{C}_{ch} + \text{predChromaResidualVal}$$

According to an embodiment, reference luma samples of a neighboring area of the reference luma block 2630 or a reference chroma sample of a neighboring area of the reference chroma block 2620 may be used to derive the filter.

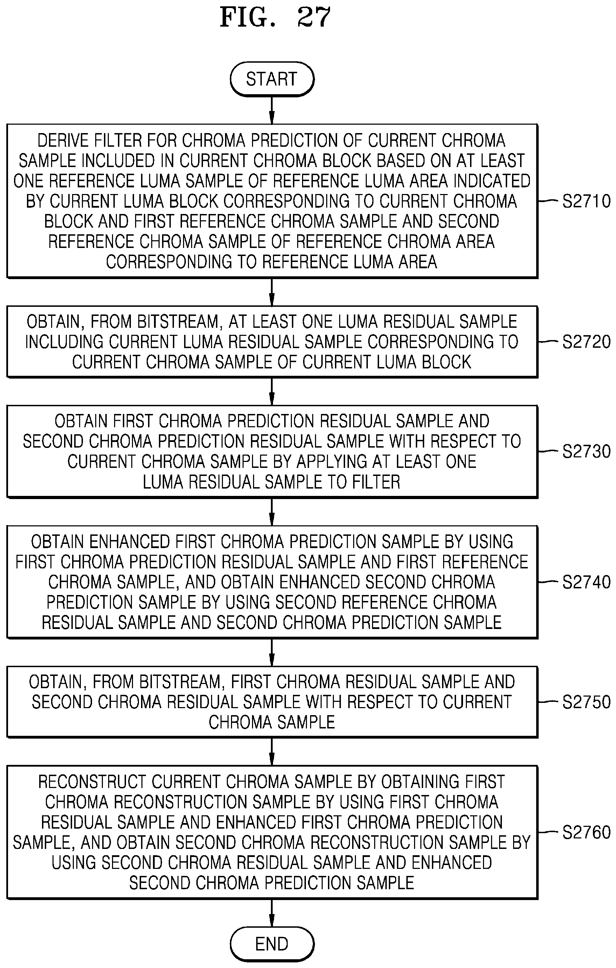

An image decoding method, an image decoding apparatus, an image encoding apparatus, and an image encoding apparatus for performing chroma prediction using a luma residual sample of a current block and a reference chroma sample of a reference area according to an embodiment of the present disclosure are described in detail with reference to FIGS. 27 to 30.

FIG. 27 is a diagram for describing an image decoding method according to an embodiment of the present disclosure.

Referring to FIG. 27, in operation S2710, an image decoding apparatus 2800 may derive a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area.

According to an embodiment of the present disclosure, when the current luma block is reconstructed in an intra-copy copy mode, the current luma block may have a block vector, and the reference luma area may be determined by the block vector.

According to an embodiment of the present disclosure, when the current luma block is reconstructed through intra template matching prediction, the reference luma area may be determined by a block vector indicating an area determined as the most similar matching area determined by intra template matching prediction.

According to an embodiment of the present disclosure, when the current luma block is reconstructed through inter prediction, the current luma block may have a motion vector, and the reference luma area may be determined by the motion vector.

In operation S2720, the image decoding apparatus 2800 may obtain, from a bitstream, at least one luma residual sample including a current luma residual sample corresponding to the current chroma sample of the current luma block.

According to an embodiment of the present disclosure, the at least one luma residual sample may include the current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

According to an embodiment of the present disclosure, the filter is an 11-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on the square of the current luma residual sample, a filter coefficient with respect to a nonlinear term based on the square of the left luma residual sample, a filter coefficient with respect to a nonlinear term based on the square of the top luma residual sample, a filter coefficient with respect to a nonlinear term based on the square of the right luma residual sample, a filter coefficient with respect to a nonlinear term based on the square of the bottom luma residual sample, and a filter coefficient with respect to a bias term.

According to an embodiment of the present disclosure, a color format of the current chroma block is 4:2:0, and the at least one luma residual sample may include the current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

According to an embodiment of the present disclosure, the filter is an 8-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on the sum of the current luma residual sample and the bottom luma residual sample, and a filter coefficient with respect to a bias term.

According to an embodiment of the present disclosure, when coordinates of the current chroma sample are (x, y), coordinates of the current luma residual sample may be (2x, 2y), coordinates of the left luma residual sample may be (2x-1, 2y), coordinates of the right luma residual sample may be (2x+1, 2y), coordinates of the bottom luma residual sample may be (2x, 2y+1), coordinates of the bottom left luma residual sample may be (2x-1, 2y+1), and coordinates of the bottom right luma residual sample may be (2x+1, 2y+1).

In operation S2730, the image decoding apparatus 2800 may obtain a first chroma prediction residual sample and a second chroma prediction residual sample with respect to the current chroma sample by applying the at least one luma residual sample to the filter.

In operation S2740, the image decoding apparatus 2800 may obtain an enhanced first chroma prediction sample by using the first chroma prediction residual sample and the first reference chroma sample, and obtain an enhanced second chroma prediction sample by using the second reference chroma residual sample and the second chroma prediction sample.

In operation S2750, the image decoding apparatus 2800 may obtain, from the bitstream, a first chroma residual sample and a second chroma residual sample with respect to the current chroma sample.

In operation S2760, the image decoding apparatus 2800 may reconstruct the current chroma sample by obtaining a first chroma reconstruction sample by using the first chroma residual sample and the enhanced first chroma prediction sample, and obtaining a second chroma reconstruction sample by using the second chroma residual sample and the enhanced second chroma prediction sample.

According to an embodiment of the present disclosure, the at least one reference luma sample may be at least one reference luma reconstruction sample, the first reference chroma sample may be a first reference chroma reconstruction sample, and the second reference chroma sample may be a second reference chroma reconstruction sample.

According to an embodiment of the present disclosure, the at least one reference luma sample may be at least one reference luma residual sample, the first reference chroma sample may be a first reference chroma residual sample, and the second reference chroma sample may be a second reference chroma residual sample.

According to an embodiment of the present disclosure, the image decoding apparatus 2800 may obtain at least one luma reconstruction sample by using the at least one reference luma sample and the at least one luma residual sample.

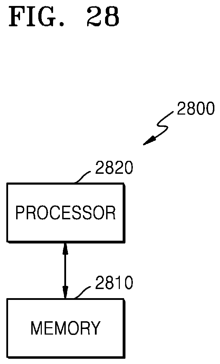

FIG. 28 is a block diagram illustrating an image decoding apparatus according to an embodiment of the present disclosure.

The image decoding apparatus 2800 according to an embodiment may include at least one memory 2810 and at least one processor 2820 connected to the at least one memory 2810. The at least one memory 2810 may include instructions implementing an embodiment of the present disclosure. The at least one processor 2820 may be operably coupled to the at least one memory 2810 and configured to implement an embodiment of the present disclosure by executing the instructions included in the at least one memory 2810. Operations of the image encoding apparatus 2800 according to an embodiment of the present disclosure may operate as individual processors or may operate by the control of a central processor.

The above-described image decoding method of FIG. 27 may be implemented by the image decoding apparatus 2800 according to an embodiment of the present disclosure.

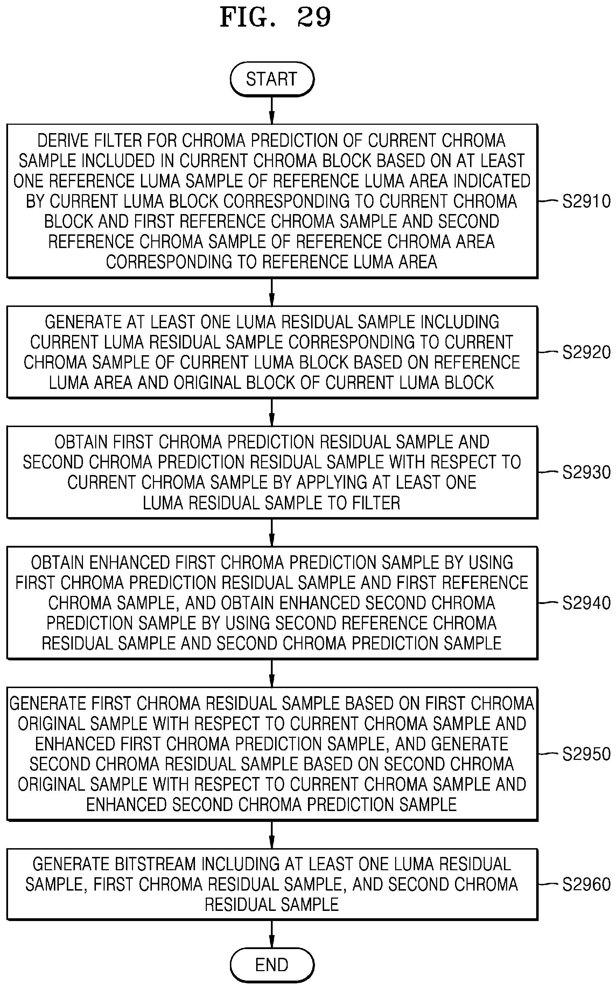

FIG. 29 is a diagram for describing an image encoding method according to an embodiment of the present disclosure.

Referring to FIG. 29, in operation S2910, an image encoding apparatus 3000 may derive a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area.

According to an embodiment of the present disclosure, when the current luma block is encoded in an intra-copy copy mode, the current luma block may have a block vector, and the reference luma area may be determined by the block vector.

According to an embodiment of the present disclosure, when the current luma block is encoded through intra template matching prediction, the reference luma area may be determined by a block vector indicating an area determined as the most similar matching area determined by intra template matching prediction.

According to an embodiment of the present disclosure, when the current luma block is encoded through inter prediction, the current luma block may have a motion vector, and the reference luma area may be determined by the motion vector.

In operation S2920, the image encoding apparatus 3000 may generate at least one luma residual sample including a current luma residual sample corresponding to the current chroma sample of the current luma block based on the reference luma area and an original block of the current luma block.

According to an embodiment of the present disclosure, the at least one luma residual sample may include a current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

According to an embodiment of the present disclosure, a filter is an 11-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on the square of the current luma residual sample, a filter coefficient with respect to a nonlinear term based on the square of the left luma residual sample, a filter coefficient with respect to a nonlinear term based on the square of the top luma residual sample, a filter coefficient with respect to a nonlinear term based on the square of the right luma residual sample, a filter coefficient with respect to a nonlinear term based on the square of the bottom luma residual sample, and a filter coefficient with respect to a bias term.

According to an embodiment of the present disclosure, a color format of the current chroma block is 4:2:0, and the at least one luma residual sample may include a current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

According to an embodiment of the present disclosure, a filter is an 8-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on the sum of the current luma residual sample and the bottom luma residual sample, and a filter coefficient with respect to a bias term.

According to an embodiment of the present disclosure, when coordinates of the current chroma sample are $(x, y)$, coordinates of the current luma residual sample may be $(2x, 2y)$, coordinates of the left luma residual sample may be $(2x-1, 2y)$, coordinates of the right luma residual sample may be $(2x+1, 2y)$, coordinates of the bottom luma residual sample may be $(2x, 2y+1)$, coordinates of the bottom left luma residual sample may be $(2x-1, 2y+1)$, and coordinates of the bottom right luma residual sample may be $(2x+1, 2y+1)$.

In operation S2930, the image encoding apparatus 3000 may obtain a first chroma prediction residual sample and a second chroma prediction residual sample with respect to the current chroma sample by applying the at least one luma residual sample to the filter.

In operation S2940, the image encoding apparatus 3000 may obtain an enhanced first chroma prediction sample by using the first chroma prediction residual sample and the first reference chroma sample, and obtain an enhanced second chroma prediction sample by using the second reference chroma residual sample and the second chroma prediction sample.

In operation S2950, the image encoding apparatus 3000 may generate a first chroma residual sample based on a first chroma original sample with respect to the current chroma sample and the enhanced first chroma prediction sample, and generate a second chroma residual sample based on a second chroma original sample with respect to the current chroma sample and the enhanced second chroma prediction sample.

In operation S2960, the image encoding apparatus 3000 may generate a bitstream including the at least one luma residual sample, the first chroma residual sample, and the second chroma residual sample.

According to an embodiment of the present disclosure, the at least one reference luma sample may be at least one reference luma reconstruction sample, the first reference chroma sample may be a first reference chroma reconstruction sample, and the second reference chroma sample may be a second reference chroma reconstruction sample.

According to an embodiment of the present disclosure, the at least one reference luma sample may be at least one reference luma residual sample, the first reference chroma sample may be a first reference chroma residual sample, and the second reference chroma sample may be a second reference chroma residual sample.

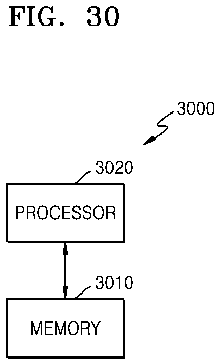

FIG. 30 is a block diagram illustrating an image encoding apparatus according to an embodiment of the present disclosure.

The image encoding apparatus 3000 according to an embodiment may include the at least one memory 3010 and the at least one processor 3020 connected to the at least one memory 3010. The at least one memory 3010 may include instructions implementing an embodiment of the present disclosure. The at least one processor 3020 may be operably coupled to the at least one memory 3010 and configured to implement an embodiment of the present disclosure by executing the instructions included in the at least one memory 3010. Operations of the image encoding apparatus 3000 according to an embodiment of the present disclosure may operate as individual processors or may operate by the control of a central processor.

The above-described image encoding method of FIG. 29 may be implemented by the image encoding apparatus 3000 according to an embodiment of the present disclosure.

According to an embodiment of the present disclosure, an image decoding method may include deriving a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area, obtaining, from a bitstream, at least one luma residual sample including a current luma residual sample corresponding to the current chroma sample of the current luma block, obtaining a first chroma prediction residual sample and a second chroma prediction residual sample with respect to the current chroma sample by applying the at least one luma residual sample to the filter, obtaining an enhanced first chroma prediction sample by using the first chroma prediction residual sample and the first reference chroma sample, and obtain an enhanced second chroma prediction sample by using the second reference chroma residual sample and the second chroma prediction sample, obtaining, from the bitstream, a first chroma residual sample and a second chroma residual sample with respect to the current chroma sample, and reconstructing the current chroma sample by obtaining a first chroma reconstruction sample by using the first chroma residual sample and the enhanced first chroma prediction sample, and obtaining a second chroma reconstruction sample by using the second chroma residual sample and the enhanced second chroma prediction sample.

According to an embodiment of the present disclosure, the image decoding method may derive a current chroma prediction residual sample through the current luma residual sample by using a reference chroma sample of a reference chroma area that has high correlations with chroma samples of a current chroma block, obtain an enhanced current chroma prediction sample by using the reference chroma sample and the current chroma prediction residual sample, and perform chroma prediction using the enhanced current chroma prediction sample and the current chroma residual sample, thereby achieving high compression efficiency and improving the accuracy of chroma prediction by using a luma reconstruction sample compared to directly using a chroma sample.

According to an embodiment of the present disclosure, when the current luma block is reconstructed in an intra copy-copy mode, the current luma block may have a block vector, and the reference luma area may be determined by the block vector.

According to an embodiment of the present disclosure, the image decoding method may use the reference luma area and the reference chroma area that are highly related to the current luma block and the current chroma block by the block vector, thereby improving the accuracy of chroma prediction.

According to an embodiment of the present disclosure, when the current luma block is reconstructed through intra template matching prediction, the reference luma area may be determined by a block vector indicating an area determined as the most similar matching area determined by intra template matching prediction.

According to an embodiment of the present disclosure, the image decoding method may determine a matching area most similar to the current luma block as the reference luma area and the reference chroma area according to intra template matching prediction, and use the reference luma area and the reference chroma area that are highly related to the current chroma block, thereby improving the accuracy of chroma prediction.

According to an embodiment of the present disclosure, when the current luma block is reconstructed through inter prediction, the current luma block may have a motion vector, and the reference luma area may be determined by the motion vector.

According to an embodiment of the present disclosure, the image decoding method may use the reference luma area and the reference chroma area that are highly related to the current luma block and the current chroma block by the motion vector, thereby improving the accuracy of chroma prediction.

According to an embodiment of the present disclosure, the at least one luma residual sample may include the current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

According to an embodiment of the present disclosure, a filter is an 11-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on the square of the current luma residual sample, a filter coefficient with respect to a nonlinear term based on the square of the left luma residual sample, a filter coefficient with respect to a nonlinear term based on the square of the top luma residual sample, a filter coefficient with respect to a nonlinear term based on the square of the right luma residual sample, a filter coefficient with respect to a nonlinear term based on the square of the bottom luma residual sample, and a filter coefficient with respect to a bias term.

According to an embodiment of the present disclosure, with respect to a BVG CCCM method, the image decoding method may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and perform chroma prediction using the enhanced current chroma prediction sample and the current chroma residual sample, thereby achieving high compression efficiency and improving the accuracy of chroma prediction by using the luma reconstruction sample compared to directly using a chroma sample.

According to an embodiment of the present disclosure, a color format of the current chroma block is 4:2:0, and the at least one luma residual sample may include the current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

According to an embodiment of the present disclosure, the filter is an 8-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on the sum of the current luma residual sample and the bottom luma residual sample, and a filter coefficient with respect to a bias term.

According to an embodiment of the present disclosure, when coordinates of the current chroma sample are $(x, y)$, coordinates of the current luma residual sample may be $(2x, 2y)$, coordinates of the left luma residual sample may be $(2x-1, 2y)$, coordinates of the right luma residual sample may be $(2x+1, 2y)$, coordinates of the bottom luma residual sample may be $(2x, 2y+1)$, coordinates of the bottom left luma residual sample may be $(2x-1, 2y+1)$, and coordinates of the bottom right luma residual sample may be $(2x+1, 2y+1)$.

According to an embodiment of the present disclosure, with respect to a CCRM method, the image decoding method may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and perform chroma prediction using the enhanced current chroma prediction sample and the current chroma residual sample, thereby achieving high compression efficiency and improving the accuracy of chroma prediction by using the luma reconstruction sample compared to directly using a chroma sample.

According to an embodiment of the present disclosure, the at least one reference luma sample may be at least one reference luma reconstruction sample, the first reference chroma sample may be a first reference chroma reconstruction sample, and the second reference chroma sample may be a second reference chroma reconstruction sample.

According to an embodiment of the present disclosure, the image decoding method may use reconstruction samples of the reference luma area and the reference chroma area that are highly related to the current luma block and the current chroma block, thereby improving the accuracy of chroma prediction.

According to an embodiment of the present disclosure, the at least one reference luma sample may be at least one reference luma residual sample, the first reference chroma sample may be a first reference chroma residual sample, and the second reference chroma sample may be a second reference chroma residual sample.

According to an embodiment of the present disclosure, the image decoding method may obtain a filter for more elaborately predicting values of residual samples by using the residual samples of the reference luma area and the reference chroma area that are highly related to the current luma block and the current chroma block, thereby improving the accuracy of chroma prediction.

According to an embodiment of the present disclosure, the image decoding method may further include obtaining at least one luma reconstruction sample by using the at least one reference luma sample and the at least one luma residual sample.

According to an embodiment of the present disclosure, the image decoding method may use the reference luma sample of the reference luma area that is highly related to the current luma block as a prediction sample of the current luma sample, thereby improving the accuracy of prediction of the current luma sample.

According to an embodiment of the present disclosure, an image decoding apparatus may include memory storing one or more instructions and at least one processor configured to operate according to the one or more instructions. The at least one processor may derive a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area. The at least one processor may obtain, from a bitstream, at least one luma residual sample including a current luma residual sample corresponding to the current chroma sample of the current luma block. The at least one processor may obtain a first chroma prediction residual sample and a second chroma prediction residual sample with respect to the current chroma sample by applying the at least one luma residual sample to the filter. The at least one processor may obtain an enhanced first chroma prediction sample by using the first chroma prediction residual sample and the first reference chroma sample, and obtain an enhanced second chroma prediction sample by using the second reference chroma residual sample and the second chroma prediction sample. The at least one processor may obtain, from the bitstream, a first chroma residual sample and a second chroma residual sample with respect to the current chroma sample. The at least one processor may reconstruct the current chroma sample by obtaining a first chroma reconstruction sample by using the first chroma residual sample and the enhanced first chroma prediction sample, and obtaining a second chroma reconstruction sample by using the second chroma residual sample and the enhanced second chroma prediction sample.

According to an embodiment of the present disclosure, the image decoding apparatus may derive a current chroma prediction residual sample through the current luma residual sample by using a reference chroma sample of a reference chroma area that has high correlations with chroma samples of a current chroma block, obtain an enhanced current chroma prediction sample by using the reference chroma sample and the current chroma prediction residual sample, and perform chroma prediction using the enhanced current chroma prediction sample and the current chroma residual sample, thereby achieving high compression efficiency and improving the accuracy of chroma prediction by using a luma reconstruction sample compared to directly using a chroma sample.

According to an embodiment of the present disclosure, when the current luma block is reconstructed in an intra-copy copy mode, the current luma block may have a block vector, and the reference luma area may be determined by the block vector.

According to an embodiment of the present disclosure, the image decoding apparatus may use the reference luma area and the reference chroma area that are highly related to the current luma block and the current chroma block by the block vector, thereby improving the accuracy of chroma prediction.

According to an embodiment of the present disclosure, when the current luma block is reconstructed through intra template matching prediction, the reference luma area may be determined by a block vector indicating an area determined as the most similar matching area determined by intra template matching prediction.

According to an embodiment of the present disclosure, the image decoding apparatus may determine a matching area most similar to the current luma block as the reference luma area and the reference chroma area according to intra template matching prediction, and use the reference luma area and the reference chroma area that are highly related to the current chroma block, thereby improving the accuracy of chroma prediction.

According to an embodiment of the present disclosure, when the current luma block is reconstructed through inter prediction, the current luma block may have a motion vector, and the reference luma area may be determined by the motion vector.

According to an embodiment of the present disclosure, the image decoding apparatus may use the reference luma area and the reference chroma area that are highly related to the current luma block and the current chroma block by the motion vector, thereby improving the accuracy of chroma prediction.

According to an embodiment of the present disclosure, the at least one luma residual sample may include the current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

According to an embodiment of the present disclosure, a filter is an 11-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on the square of the current luma residual sample, a filter coefficient with respect to a nonlinear term based on the square of the left luma residual sample, a filter coefficient with respect to a nonlinear term based on the square of the top luma residual sample, a filter coefficient with respect to a nonlinear term based on the square of the right luma residual sample, a filter coefficient with respect to a nonlinear term based on the square of the bottom luma residual sample, and a filter coefficient with respect to a bias term.

According to an embodiment of the present disclosure, with respect to a BVG CCCM method, the image decoding apparatus may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and perform chroma prediction using the enhanced current chroma prediction sample and the current chroma residual sample, thereby achieving high compression efficiency and improving the accuracy of chroma prediction by using the luma reconstruction sample compared to directly using a chroma sample.

According to an embodiment of the present disclosure, a color format of the current chroma block is 4:2:0, and the at least one luma residual sample may include the current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

According to an embodiment of the present disclosure, the filter is an 8-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on the sum of the current luma residual sample and the bottom luma residual sample, and a filter coefficient with respect to a bias term.

According to an embodiment of the present disclosure, when coordinates of the current chroma sample are (x, y), coordinates of the current luma residual sample may be (2x, 2y), coordinates of the left luma residual sample may be (2x-1, 2y), coordinates of the right luma residual sample may be (2x+1, 2y), coordinates of the bottom luma residual sample may be (2x, 2y+1), coordinates of the bottom left luma residual sample may be (2x-1, 2y+1), and coordinates of the bottom right luma residual sample may be (2x+1, 2y+1).

According to an embodiment of the present disclosure, with respect to a CCRM method, the image decoding method may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and perform chroma prediction using the enhanced current chroma prediction sample and the current chroma residual sample, thereby achieving high compression efficiency and improving the accuracy of chroma prediction by using the luma reconstruction sample compared to directly using a chroma sample.

According to an embodiment of the present disclosure, the at least one reference luma sample may be at least one reference luma reconstruction sample, the first reference chroma sample may be a first reference chroma reconstruction sample, and the second reference chroma sample may be a second reference chroma reconstruction sample.

According to an embodiment of the present disclosure, the image decoding apparatus may use reconstruction samples of the reference luma area and the reference chroma area that are highly related to the current luma block and the current chroma block, thereby improving the accuracy of chroma prediction.

According to an embodiment of the present disclosure, the at least one reference luma sample may be at least one reference luma residual sample, the first reference chroma sample may be a first reference chroma residual sample, and the second reference chroma sample may be a second reference chroma residual sample.

According to an embodiment of the present disclosure, the image decoding apparatus may use residual samples of the reference luma area and the reference chroma area that are highly related to the current luma block and the current chroma block, thereby obtaining a filter for more elaborately predicting values of the residual samples, and improving the accuracy of chroma prediction.

According to an embodiment of the present disclosure, at least one processor may reconstruction sample by using the at least one reference luma sample and the at least one luma residual sample.

According to an embodiment of the present disclosure, the image decoding apparatus may use the reference luma sample of the reference luma area that is highly related to the current luma block as a prediction sample of the current luma sample, thereby improving the accuracy of prediction of the current luma sample.

According to an embodiment of the present disclosure, an image encoding method may include deriving a filter for chroma prediction of a current chroma sample included in a current chroma block based on at least one reference luma sample of a reference luma area indicated by a current luma block corresponding to the current chroma block and a first reference chroma sample and a second reference chroma sample of a reference chroma area corresponding to the reference luma area, generating at least one luma residual sample including a current luma residual sample corresponding to the current chroma sample of the current luma block based on the reference luma area and an original block of the current luma block, obtaining a first chroma prediction residual sample and a second chroma prediction residual sample with respect to the current chroma sample by applying the at least one luma residual sample to the filter, obtaining an enhanced first chroma prediction sample by using the first chroma prediction residual sample and the first reference chroma sample, and obtain an enhanced second chroma prediction sample by using the second reference chroma residual sample and the second chroma prediction sample, generate a first chroma residual sample based on a first chroma original sample with respect to the current chroma sample and the enhanced first chroma prediction sample, and generating a second chroma residual sample based on a second chroma original sample with respect to the current chroma sample and the enhanced second chroma prediction sample, and generating a bitstream including the at least one luma residual sample, the first chroma residual sample, and the second chroma residual sample.

According to an embodiment of the present disclosure, the image encoding method may derive a current chroma prediction residual sample through the current luma residual sample by using a reference chroma sample of a reference chroma area that has high correlations with chroma samples of a current chroma block, obtain an enhanced current chroma prediction sample by using the reference chroma sample and the current chroma prediction residual sample, and generate a current chroma residual sample by using the enhanced current chroma prediction sample and a current chroma original sample, thereby achieving high compression efficiency and improving the accuracy of chroma prediction by using a luma reconstruction sample compared to directly using a chroma sample.

According to an embodiment of the present disclosure, when the current luma block is encoded in an intra-copy copy mode, the current luma block may have a block vector, and the reference luma area may be determined by the block vector.

According to an embodiment of the present disclosure, the image encoding method may use the reference luma area and the reference chroma area that are highly related to the current luma block and the current chroma block by the block vector, thereby improving the accuracy of chroma prediction.

According to an embodiment of the present disclosure, when the current luma block is encoded through intra template matching prediction, the reference luma area may be determined by a block vector indicating an area determined as the most similar matching area determined by intra template matching prediction.

According to an embodiment of the present disclosure, the image encoding method may determine a matching area most similar to the current luma block as the reference luma area and the reference chroma area according to intra template matching prediction, and use the reference luma area and the reference chroma area that are highly related to the current chroma block, thereby improving the accuracy of chroma prediction.

According to an embodiment of the present disclosure, when the current luma block is encoded through inter prediction, the current luma block may have a motion vector, and the reference luma area may be determined by the motion vector.

According to an embodiment of the present disclosure, the image encoding method may use the reference luma area and the reference chroma area that are highly related to the current luma block and the current chroma block by the motion vector, thereby improving the accuracy of chroma prediction.

According to an embodiment of the present disclosure, the at least one luma residual sample may include the current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

According to an embodiment of the present disclosure, a filter is an 11-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on the square of the current luma residual sample, a filter coefficient with respect to a nonlinear term based on the square of the left luma residual sample, a filter coefficient with respect to a nonlinear term based on the square of the top luma residual sample, a filter coefficient with respect to a nonlinear term based on the square of the right luma residual sample, a filter coefficient with respect to a nonlinear term based on the square of the bottom luma residual sample, and a filter coefficient with respect to a bias term.

According to an embodiment of the present disclosure, with respect to a BVG CCCM method, the image encoding method may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and generate a current chroma residual sample by using the enhanced current chroma prediction sample and a current chroma original sample, thereby achieving high compression efficiency and improving the accuracy of chroma prediction by using the luma reconstruction sample compared to directly using a chroma sample.

According to an embodiment of the present disclosure, a color format of the current chroma block is 4:2:0, and the at least one luma residual sample may include the current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

According to an embodiment of the present disclosure, the filter is an 8-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on the sum of the current luma residual sample and the bottom luma residual sample, and a filter coefficient with respect to a bias term.

According to an embodiment of the present disclosure, when coordinates of the current chroma sample are (x, y), coordinates of the current luma residual sample may be (2x, 2y), coordinates of the left luma residual sample may be (2x-1, 2y), coordinates of the right luma residual sample may be (2x+1, 2y), coordinates of the bottom luma residual sample may be (2x, 2y+1), coordinates of the bottom left luma residual sample may be (2x-1, 2y+1), and coordinates of the bottom right luma residual sample may be (2x+1, 2y+1).

According to an embodiment of the present disclosure, with respect to a CCRM method, the image encoding method may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and generate a current chroma residual sample by using the enhanced current chroma prediction sample and a current chroma original sample, thereby achieving high compression efficiency and improving the accuracy of chroma prediction by using the luma reconstruction sample compared to directly using a chroma sample.

According to an embodiment of the present disclosure, the at least one reference luma sample may be at least one reference luma encoding sample, the first reference chroma sample may be a first reference chroma encoding sample, and the second reference chroma sample may be a second reference chroma encoding sample.

According to an embodiment of the present disclosure, the image encoding method may use encoding samples of the reference luma area and the reference chroma area that are highly related to the current luma block and the current chroma block, thereby improving the accuracy of chroma prediction.

According to an embodiment of the present disclosure, the at least one reference luma sample may be at least one reference luma residual sample, the first reference chroma sample may be a first reference chroma residual sample, and the second reference chroma sample may be a second reference chroma residual sample.

According to an embodiment of the present disclosure, the image encoding method may obtain a filter for more elaborately predicting values of residual samples by using the residual samples of the reference luma area and the reference chroma area that are highly related to the current luma block and the current chroma block, thereby improving the accuracy of chroma prediction.

According to an embodiment of the present disclosure, an image encoding apparatus may include memory storing one or more instructions and at least one processor configured to operate according to the one or more instructions. The at least one processor may derive a filter for chroma prediction of a current chroma sample included in a current chroma block based on at least one reference luma sample of a reference luma area indicated by a current luma block corresponding to the current chroma block and a first reference chroma sample and a second reference chroma sample of a reference luma area corresponding to the reference luma area. The at least one processor may generate at least one luma residual sample including a current luma residual sample corresponding to the current chroma sample of the current luma block based on the reference luma area and an original block of the current luma block. The at least one processor may obtain a first chroma prediction residual sample and a second chroma prediction residual sample with respect to the current chroma sample by applying the at least one luma residual sample to the filter. The at least one processor may obtain an enhanced first chroma prediction sample by using the first chroma prediction residual sample and the first reference chroma sample, and obtain an enhanced second chroma prediction sample by using the second reference chroma residual sample and the second chroma prediction sample. The at least one processor may generate a first chroma residual sample based on a first chroma original sample with respect to the current chroma sample and the enhanced first chroma prediction sample, and generate a second chroma residual sample based on a second chroma original sample with respect to the current chroma sample and the enhanced second chroma prediction sample. The at least one processor may generate a bitstream including the at least one luma residual sample, the first chroma residual sample, and the second chroma residual sample.

According to an embodiment of the present disclosure, the image encoding apparatus may derive a current chroma prediction residual sample through the current luma residual sample by using a reference chroma sample of a reference chroma area that has high correlations with chroma samples of a current chroma block, obtain an enhanced current chroma prediction sample by using the reference chroma sample and the current chroma prediction residual sample, and generate a current chroma residual sample by using the enhanced current chroma prediction sample and a current chroma original sample, thereby achieving high compression efficiency and improving the accuracy of chroma prediction by using a luma reconstruction sample compared to directly using a chroma sample.

According to an embodiment of the present disclosure, when the current luma block is encoded in an intra-copy copy mode, the current luma block may have a block vector, and the reference luma area may be determined by the block vector.

According to an embodiment of the present disclosure, the image encoding apparatus may use the reference luma area and the reference chroma area that are highly related to the current luma block and the current chroma block by the block vector, thereby improving the accuracy of chroma prediction.

According to an embodiment of the present disclosure, when the current luma block is encoded through intra template matching prediction, the reference luma area may be determined by a block vector indicating an area determined as the most similar matching area determined by intra template matching prediction.

According to an embodiment of the present disclosure, the image encoding apparatus may determine a matching area most similar to the current luma block as the reference luma area and the reference chroma area according to intra template matching prediction, and use the reference luma area and the reference chroma area that are highly related to the current chroma block, thereby improving the accuracy of chroma prediction.

According to an embodiment of the present disclosure, when the current luma block is encoded through inter prediction, the current luma block may have a motion vector, and the reference luma area may be determined by the motion vector.

According to an embodiment of the present disclosure, the image encoding apparatus may use the reference luma area and the reference chroma area that are highly related to the current luma block and the current chroma block by the motion vector, thereby improving the accuracy of chroma prediction.

According to an embodiment of the present disclosure, the at least one luma residual sample may include the current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

According to an embodiment of the present disclosure, a filter is an 11-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on the square of the current luma residual sample, a filter coefficient with respect to a nonlinear term based on the square of the left luma residual sample, a filter coefficient with respect to a nonlinear term based on the square of the top luma residual sample, a filter coefficient with respect to a nonlinear term based on the square of the right luma residual sample, a filter coefficient with respect to a nonlinear term based on the square of the bottom luma residual sample, and a filter coefficient with respect to a bias term.

According to an embodiment of the present disclosure, with respect to a BVG CCCM method, the image encoding apparatus may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and generate a current chroma residual sample by using the enhanced current chroma prediction sample and a current chroma original sample, thereby achieving high compression efficiency and improving the accuracy of chroma prediction by using the luma reconstruction sample compared to directly using a chroma sample.

According to an embodiment of the present disclosure, a color format of the current chroma block is 4:2:0, and the at least one luma residual sample may include the current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

According to an embodiment of the present disclosure, the filter is an 8-tap filter, and filter coefficients of the filter may include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on the sum of the current luma residual sample and the bottom luma residual sample, and a filter coefficient with respect to a bias term.

According to an embodiment of the present disclosure, when coordinates of the current chroma sample are (x, y), coordinates of the current luma residual sample may be (2x, 2y), coordinates of the left luma residual sample may be (2x-1, 2y), coordinates of the right luma residual sample may be (2x+1, 2y), coordinates of the bottom luma residual sample may be (2x, 2y+1), coordinates of the bottom left luma residual sample may be (2x-1, 2y+1), and coordinates of the bottom right luma residual sample may be (2x+1, 2y+1).

According to an embodiment of the present disclosure, with respect to a CCRM method, the image encoding apparatus may derive the current chroma prediction residual sample through the current luma residual sample by using the reference luma area and the reference chroma area that are highly related to the current chroma block, obtain the enhanced current chroma prediction sample by using the reference chroma sample and the current chroma prediction residual sample, and generate a current chroma residual sample by using the enhanced current chroma prediction sample and a current chroma original sample, thereby achieving high compression efficiency and improving the accuracy of chroma prediction by using the luma reconstruction sample compared to directly using a chroma sample.

According to an embodiment of the present disclosure, the at least one reference luma sample may be at least one reference luma encoding sample, the first reference chroma sample may be a first reference chroma encoding sample, and the second reference chroma sample may be a second reference chroma encoding sample.

According to an embodiment of the present disclosure, the image encoding method may use encoding samples of the reference luma area and the reference chroma area that are highly related to the current luma block and the current chroma block, thereby improving the accuracy of chroma prediction.

According to an embodiment of the present disclosure, the at least one reference luma sample may be at least one reference luma residual sample, the first reference chroma sample may be a first reference chroma residual sample, and the second reference chroma sample may be a second reference chroma residual sample.

According to an embodiment of the present disclosure, the image encoding method may obtain a filter for more elaborately predicting values of residual samples by using the residual samples of the reference luma area and the reference chroma area that are highly related to the current luma block and the current chroma block, thereby improving the accuracy of chroma prediction.

The machine-readable storage medium may be provided in the shape of a non-transitory storage medium. Here, the 'non-transitory storage medium' only denotes a tangible device and does not include a signal (e.g., electromagnetic waves). This term does not distinguish a case where data is stored in the storage medium semi-permanently and a case where the data is stored in the storage medium temporarily. For example, the 'non-transitory storage medium' may include a buffer where data is temporarily store.

According to an embodiment, a method according to various embodiments of the disclosure in the specification may be provided by being included in a computer program product. The computer program product, which is a commodity, may be traded between sellers and buyers. The computer program product may be distributed in the shape of machine-readable storage medium (e.g., compact disc read only memory (CD-ROM)), or distributed (e.g., downloaded or uploaded) through an application store or directly and online between two user devices (e.g., smartphones). In the case of online distribution, at least a part of the computer program product (e.g., a downloadable app) may be at least temporarily generated or temporarily stored in a machine-readable storage medium, such as a server of a manufacturer, a server of an application store, or memory of a relay server.

**Claims**

1. An image decoding method comprising:
   deriving a filter for chroma prediction of a current chroma sample comprised in a current chroma block based on at least one reference luma sample of a reference luma area indicated by a current luma block corresponding to the current chroma block and a first reference chroma sample and a second reference chroma sample of a reference chroma area corresponding to the reference luma area (S2710);

   obtaining, from a bitstream, at least one luma residual sample comprising a current luma residual sample corresponding to the current chroma sample of the current luma block (S2720);
   obtaining a first chroma prediction residual sample and a second chroma prediction residual sample with respect to the current chroma sample by applying the at least one luma residual sample to the filter (S2730);
   obtaining an enhanced first chroma prediction sample by using the first chroma prediction residual sample and the first reference chroma sample, and obtaining an enhanced second chroma prediction sample by using the second reference chroma residual sample and the second chroma prediction sample (S2740);
   obtaining, from the bitstream, a first chroma residual sample and a second chroma residual sample with respect to the current chroma sample (S2750); and
   reconstructing the current chroma sample by obtaining a first chroma reconstruction sample by using the first chroma residual sample and the enhanced first chroma prediction sample, and obtaining a second chroma reconstruction sample by using the second chroma residual sample and the enhanced second chroma prediction sample (S2760).

2. The image decoding method of claim 1, wherein

when the current luma block is reconstructed in an intra-copy copy mode, the current luma block has a block vector, and
the reference luma area is determined by the block vector.

3. The image decoding method of claim 1, wherein
when the current luma block is reconstructed through intra template matching prediction, the reference luma area is determined by a block vector indicating an area determined as a most similar matching area determined by the intra template matching prediction.

4. The image decoding method of claim 1, wherein

when the current luma block is reconstructed through inter prediction, the current luma block has a motion vector, and
the reference luma area is determined by the motion vector.

5. The image decoding method of claim 2 or 3, wherein
at least one luma residual sample includes the current luma residual sample, a left luma residual sample adjacent to the left of the current luma residual sample, a top luma residual sample adjacent to the top of the current luma residual sample, a right luma residual sample adjacent to the right of the current luma residual sample, and a bottom luma residual sample adjacent to the bottom of the current luma residual sample.

6. The image decoding method of claim 5, wherein

the filter is an 11-tap filter, and
filter coefficients of the filter include a filter coefficient with respect to the current luma residual sample, a filter coefficient with respect to the left luma residual sample, a filter coefficient with respect to the top luma residual sample, a filter coefficient with respect to the right luma residual sample, a filter coefficient with respect to the bottom luma residual sample, a filter coefficient with respect to a nonlinear term based on a square of the current luma residual sample, a filter coefficient with respect to a nonlinear term based on a square of the left luma residual sample, a filter coefficient with respect to a nonlinear term based on a square of the top luma residual sample, a filter coefficient with respect to a nonlinear term based on a square of the right luma residual sample, a filter coefficient with respect to a nonlinear term based on a square of the bottom luma residual sample, and a filter coefficient with respect to a bias term.

7. The image decoding method of claim 4, wherein

a color format of a current chroma block is 4:2:0, and
at least one luma residual sample includes the current luma residual sample, a left luma residual sample adjacent to the left of the current luma residual sample, a right luma residual sample adjacent to the right of the current luma residual sample, a bottom left luma residual sample adjacent to the bottom left of the current luma residual sample, a bottom luma residual sample adjacent to the bottom of the current luma residual sample, and a bottom right luma residual sample adjacent to the bottom right of the current luma residual sample.

8. The image decoding method of claim 7, wherein

the filter is an 8-tap filter, and
filter coefficients of the filter include a filter coefficient with respect to the current luma residual sample, a filter coefficient with respect to the left luma residual sample, a filter coefficient with respect to the top luma residual sample, a filter coefficient with respect to the bottom left luma residual sample, a filter coefficient with respect to the bottom luma residual sample, a filter coefficient with respect to the bottom right luma residual sample, a filter coefficient with respect to a nonlinear term based on a sum of the current luma residual sample and the bottom luma residual sample, and a filter coefficient with respect to a bias term.

9. The image decoding method of claim 6 or 7, wherein
when coordinates of the current chroma sample are (x, y), coordinates of the current luma residual sample are (2x, 2y), coordinates of the left luma residual sample are (2x-1, 2y), coordinates of the right luma residual sample are (2x+1, 2y), coordinates of the bottom luma residual sample are (2x, 2y+1), coordinates of the bottom left luma residual sample are (2x-1, 2y+1), and coordinates of the bottom right luma residual sample are (2x+1, 2y+1).

10. The image decoding method of any one of claims 1 to 9, wherein

the at least one reference luma sample is at least one reference luma reconstruction sample,
the first reference chroma sample is a first reference chroma reconstruction sample, and
the second reference chroma sample is a second reference chroma reconstruction sample.

11. The image decoding method of any one of claims 1 to 9, wherein

the at least one reference luma sample is at least one reference luma residual sample,
the first reference chroma sample is a first reference chroma residual sample, and
the second reference chroma sample is a second reference chroma residual sample.

12. The image decoding method of any one of claims 1 to 11, further comprising:
obtaining at least one luma reconstruction sample by using the at least one reference luma sample and the at least one luma residual sample.

13. An image encoding method comprising:
deriving a filter for chroma prediction of a current chroma sample comprised in a current chroma block based on at least one reference luma sample of a reference luma area indicated by a current luma block corresponding to the current chroma block and a first reference chroma sample and a second reference chroma sample of a reference chroma area corresponding to the reference luma area (S2910);

generating at least one luma residual sample comprising a current luma residual sample corresponding to the current chroma sample of the current luma block based on the reference luma area and an original block of the current luma block (S2920);
obtaining a first chroma prediction residual sample and a second chroma prediction residual sample with respect to the current chroma sample by applying the at least one luma residual sample to the filter (S2930);
obtaining an enhanced first chroma prediction sample by using the first chroma prediction residual sample and the first reference chroma sample, and obtaining an enhanced second chroma prediction sample by using the second reference chroma residual sample and the second chroma prediction sample (S2940);
generating a first chroma residual sample based on a first chroma original sample with respect to the current chroma sample and the enhanced first chroma prediction sample, and generate a second chroma residual sample based on a second chroma original sample with respect to the current chroma sample and the enhanced second chroma prediction sample (S2950); and
generating a bitstream comprising the at least one luma residual sample, the first chroma residual sample, and the second chroma residual sample (S2960).

14. The image encoding method of claim 13, wherein

when the current luma block is encoded in an intra-copy copy mode, the current luma block has a block vector, and the reference luma area is determined by the block vector.

15. The image encoding method of claim 13, wherein
when the current luma block is encoded through intra template matching prediction, the reference luma area is determined by a block vector indicating an area determined as a most similar matching area determined by the intra template matching prediction.

# FIG. 1

BITSTREAM

100

110

RECEIVER

120

DECODER

OUTPUT IMAGE

# FIG. 2

START

OBTAIN BIN STRING CORRESPONDING TO SPLIT SHAPE MODE — 210

DETERMINE SPLIT RULE — 220

SPLIT CODING UNIT INTO PLURALITY OF CODING UNITS — 230

END

# FIG. 3

300

310a  310b 310b  310c  310d 310d 310e 310e 310e

310f

310f

310f

310c  310d 310d

# FIG. 4

400 —

410

420a
420b

430a
430b
430c

450

460

470a 470b

480a 480b 480c

FIG. 5

500

510

520a

520b 520c 520d

530a

530b
530c
530d

EP 4 770 085 A1

# FIG. 6

# FIG. 7

# FIG. 8

# FIG. 9

FIG. 10

# FIG. 11

# FIG. 12

1200

1210a 1210b      1220a

. . .

1220b

1216a 1216b      1226a 1226b

1217

. . .                      . . .

1216c 1216d      1226c 1226d

1227

# FIG. 13

| BLOCK SHAPE / DEPTH | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

# FIG. 14

EP 4 770 085 A1

# FIG. 15

# FIG. 16

# FIG. 17

# FIG. 18

# FIG. 19

**LUMA CHANNEL**

NEIGHBORING PIXELS
— 1945
1940 —
REFERENCE LUMA BLOCK
BLOCK VECTOR, MOTION VECTOR, OR MATCHING BLOCK ACCORDING INTRA TMP
NEIGHBORING PIXELS
— 1925
— 1920
CURRENT LUMA BLOCK

**CHROMA CHANNEL**

NEIGHBORING PIXELS
— 1935
1930 —
REFERENCE CHROMA BLOCK
BLOCK VECTOR, MOTION VECTOR, OR MATCHING BLOCK ACCORDING INTRA TMP
NEIGHBORING PIXELS
— 1915
— 1910
CURRENT CHROMA BLOCK

FIG. 20

# FIG. 21

**FIG. 22**

EP 4 770 085 A1

# FIG. 23

# FIG. 24

EP 4 770 085 A1

# FIG. 25

# FIG. 26

# FIG. 27

START

DERIVE FILTER FOR CHROMA PREDICTION OF CURRENT CHROMA SAMPLE INCLUDED IN CURRENT CHROMA BLOCK BASED ON AT LEAST ONE REFERENCE LUMA SAMPLE OF REFERENCE LUMA AREA INDICATED BY CURRENT LUMA BLOCK CORRESPONDING TO CURRENT CHROMA BLOCK AND FIRST REFERENCE CHROMA SAMPLE AND SECOND REFERENCE CHROMA SAMPLE OF REFERENCE CHROMA AREA CORRESPONDING TO REFERENCE LUMA AREA — S2710

OBTAIN, FROM BITSTREAM, AT LEAST ONE LUMA RESIDUAL SAMPLE INCLUDING CURRENT LUMA RESIDUAL SAMPLE CORRESPONDING TO CURRENT CHROMA SAMPLE OF CURRENT LUMA BLOCK — S2720

OBTAIN FIRST CHROMA PREDICTION RESIDUAL SAMPLE AND SECOND CHROMA PREDICTION RESIDUAL SAMPLE WITH RESPECT TO CURRENT CHROMA SAMPLE BY APPLYING AT LEAST ONE LUMA RESIDUAL SAMPLE TO FILTER — S2730

OBTAIN ENHANCED FIRST CHROMA PREDICTION SAMPLE BY USING FIRST CHROMA PREDICTION RESIDUAL SAMPLE AND FIRST REFERENCE CHROMA SAMPLE, AND OBTAIN ENHANCED SECOND CHROMA PREDICTION SAMPLE BY USING SECOND REFERENCE CHROMA RESIDUAL SAMPLE AND SECOND CHROMA PREDICTION SAMPLE — S2740

OBTAIN, FROM BITSTREAM, FIRST CHROMA RESIDUAL SAMPLE AND SECOND CHROMA RESIDUAL SAMPLE WITH RESPECT TO CURRENT CHROMA SAMPLE — S2750

RECONSTRUCT CURRENT CHROMA SAMPLE BY OBTAINING FIRST CHROMA RECONSTRUCTION SAMPLE BY USING FIRST CHROMA RESIDUAL SAMPLE AND ENHANCED FIRST CHROMA PREDICTION SAMPLE, AND OBTAIN SECOND CHROMA RECONSTRUCTION SAMPLE BY USING SECOND CHROMA RESIDUAL SAMPLE AND ENHANCED SECOND CHROMA PREDICTION SAMPLE — S2760

END

# FIG. 28

2800

2820

PROCESSOR

2810

MEMORY

# FIG. 29

START

DERIVE FILTER FOR CHROMA PREDICTION OF CURRENT CHROMA SAMPLE INCLUDED IN CURRENT CHROMA BLOCK BASED ON AT LEAST ONE REFERENCE LUMA SAMPLE OF REFERENCE LUMA AREA INDICATED BY CURRENT LUMA BLOCK CORRESPONDING TO CURRENT CHROMA BLOCK AND FIRST REFERENCE CHROMA SAMPLE AND SECOND REFERENCE CHROMA SAMPLE OF REFERENCE CHROMA AREA CORRESPONDING TO REFERENCE LUMA AREA — S2910

GENERATE AT LEAST ONE LUMA RESIDUAL SAMPLE INCLUDING CURRENT LUMA RESIDUAL SAMPLE CORRESPONDING TO CURRENT CHROMA SAMPLE OF CURRENT LUMA BLOCK BASED ON REFERENCE LUMA AREA AND ORIGINAL BLOCK OF CURRENT LUMA BLOCK — S2920

OBTAIN FIRST CHROMA PREDICTION RESIDUAL SAMPLE AND SECOND CHROMA PREDICTION RESIDUAL SAMPLE WITH RESPECT TO CURRENT CHROMA SAMPLE BY APPLYING AT LEAST ONE LUMA RESIDUAL SAMPLE TO FILTER — S2930

OBTAIN ENHANCED FIRST CHROMA PREDICTION SAMPLE BY USING FIRST CHROMA PREDICTION RESIDUAL SAMPLE AND FIRST REFERENCE CHROMA SAMPLE, AND OBTAIN ENHANCED SECOND CHROMA PREDICTION SAMPLE BY USING SECOND REFERENCE CHROMA RESIDUAL SAMPLE AND SECOND CHROMA PREDICTION SAMPLE — S2940

GENERATE FIRST CHROMA RESIDUAL SAMPLE BASED ON FIRST CHROMA ORIGINAL SAMPLE WITH RESPECT TO CURRENT CHROMA SAMPLE AND ENHANCED FIRST CHROMA PREDICTION SAMPLE, AND GENERATE SECOND CHROMA RESIDUAL SAMPLE BASED ON SECOND CHROMA ORIGINAL SAMPLE WITH RESPECT TO CURRENT CHROMA SAMPLE AND ENHANCED SECOND CHROMA PREDICTION SAMPLE — S2950

GENERATE BITSTREAM INCLUDING AT LEAST ONE LUMA RESIDUAL SAMPLE, FIRST CHROMA RESIDUAL SAMPLE, AND SECOND CHROMA RESIDUAL SAMPLE — S2960

END

# FIG. 30

3000

3020

PROCESSOR

3010

MEMORY

# EP 4 770 085 A1

## INTERNATIONAL SEARCH REPORT

| International application No. |
|---|
| **PCT/KR2024/012277** |

### A. CLASSIFICATION OF SUBJECT MATTER

**H04N 19/117**(2014.01)i; **H04N 19/105**(2014.01)i; **H04N 19/186**(2014.01)i; **H04N 19/132**(2014.01)i; **H04N 19/157**(2014.01)i; **H04N 19/593**(2014.01)i

According to International Patent Classification (IPC) or to both national classification and IPC

### B. FIELDS SEARCHED

Minimum documentation searched (classification system followed by classification symbols)

H04N 19/117(2014.01); H04N 19/105(2014.01); H04N 19/11(2014.01); H04N 19/119(2014.01); H04N 19/126(2014.01); H04N 19/167(2014.01); H04N 19/59(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 참조 루마 샘플(reference luma sample), 참조 크로마 샘플(reference chroma sample), 필터(filter), 루마 잔차 샘플(luma residual sample), 크로마 예측 잔차 샘플(chroma prediction residual sample), 강화된 크로마 예측 샘플(enhanced chroma prediction sample), 복원(restore)

### C. DOCUMENTS CONSIDERED TO BE RELEVANT

| Category* | Citation of document, with indication, where appropriate, of the relevant passages | Relevant to claim No. |
|---|---|---|
| A | KR 10-2520295 B1 (QUALCOMM INCORPORATED) 10 April 2023 (2023-04-10)<br>See claims 1, 5 and 8. 10 | 1-15 |
| A | KR 10-2021-0037506 A (SK TELECOM CO., LTD.) 06 April 2021 (2021-04-06)<br>See paragraph [0007]. | 1-15 |
| A | KR 10-2409443 B1 (ELECTRONICS AND TELECOMMUNICATIONS RESEARCH INSTITUTE) 15 June 2022 (2022-06-15)<br>See paragraphs [0109]-[0110]; and claim 1. | 1-15 |
| A | KR 10-2021-0154150 A (BEIJING BYTEDANCE NETWORK TECHNOLOGY CO., LTD. et al.) 20 December 2021 (2021-12-20)<br>See claims 1-3. | 1-15 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 November 2024** | **22 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/012277** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2277121 B1 (KOREA ADVANCED INSTITUTE OF SCIENCE AND TECHNOLOGY et al.) 15 July 2021 (2021-07-15)<br>See paragraph [0092]. | 1-15 |

Form PCT/ISA/210 (second sheet) (July 2022)

| INTERNATIONAL SEARCH REPORT | | | International application No. | |
|---|---|---|---|---|
| Information on patent family members | | | **PCT/KR2024/012277** | |

| Patent document cited in search report | | | Publication date (day/month/year) | Patent family member(s) | | | Publication date (day/month/year) |
|---|---|---|---|---|---|---|---|
| KR | 10-2520295 | B1 | 10 April 2023 | EP | 3272121 | A1 | 24 January 2018 |
| | | | | EP | 3272121 | B1 | 07 July 2021 |
| | | | | JP | 2018-514119 | A | 31 May 2018 |
| | | | | JP | 6827944 | B2 | 10 February 2021 |
| | | | | KR | 10-2017-0129750 | A | 27 November 2017 |
| | | | | US | 10455249 | B2 | 22 October 2019 |
| | | | | US | 2016-0277762 | A1 | 22 September 2016 |
| | | | | WO | 2016-154008 | A1 | 29 September 2016 |
| KR | 10-2021-0037506 | A | 06 April 2021 | CN | 114731444 | A | 08 July 2022 |
| | | | | CN | 114731444 | B | 05 July 2024 |
| | | | | US | 12022082 | B2 | 25 June 2024 |
| | | | | US | 2022-0353505 | A1 | 03 November 2022 |
| | | | | WO | 2021-060804 | A1 | 01 April 2021 |
| KR | 10-2409443 | B1 | 15 June 2022 | CN | 118714296 | A | 27 September 2024 |
| | | | | CN | 118741103 | A | 01 October 2024 |
| | | | | JP | 2024-128092 | A | 20 September 2024 |
| | | | | JP | 7356347 | B2 | 04 October 2023 |
| | | | | KR | 10-2688470 | B1 | 25 July 2024 |
| | | | | US | 2024-0314300 | A1 | 19 September 2024 |
| | | | | WO | 2018-066849 | A1 | 12 April 2018 |
| KR | 10-2021-0154150 | A | 20 December 2021 | EP | 3935834 | A1 | 12 January 2022 |
| | | | | EP | 3935834 | A4 | 17 August 2022 |
| | | | | JP | 2023-165823 | A | 17 November 2023 |
| | | | | JP | 7302009 | B2 | 03 July 2023 |
| | | | | KR | 10-2021-0150397 | A | 10 December 2021 |
| | | | | KR | 10-2685431 | B1 | 17 July 2024 |
| | | | | US | 11616965 | B2 | 28 March 2023 |
| | | | | US | 2023-0117813 | A1 | 20 April 2023 |
| | | | | WO | 2020-211869 | A1 | 22 October 2020 |
| KR | 10-2277121 | B1 | 15 July 2021 | KR | 10-2023-0141671 | A | 10 October 2023 |
| | | | | KR | 10-2584163 | B1 | 05 October 2023 |

Form PCT/ISA/210 (patent family annex) (July 2022)